# EUROPEAN PATENT SPECIFICATION

(11) **EP 4 277 942 B1**
(45) Date of publication and mention of the grant of the patent: **07.10.2026**
(21) Application number: 22701187.1
(22) Date of filing: 13.01.2022
(51) Int. Cl.: C08G 18/61, B33Y 70/00, C08G 18/67, C08G 18/75, C08G 18/80, C09D 175/16

(54) **SILICONE URETHANE (METH)ACRYLATES AND THEIR USE IN 3D PRINTING RESINS AND COATING COMPOSITIONS**
SILIKONURETHAN-(METH)ACRYLATE UND IHRE VERWENDUNG IN 3D-DRUCKHARZEN UND BESCHICHTUNGSZUSAMMENSETZUNGEN
(MÉTH)ACRYLATES DE SILICONE-URÉTHANE ET LEUR UTILISATION DANS LES RÉSINES D'IMPRESSION 3D ET LES COMPOSITIONS DE REVÊTEMENT

(30) Priority: 15.01.2021 EP 21151764
(43) Date of publication of application: 22.11.2023
(73) Proprietor: Evonik Operations GmbH, 45128 Essen (DE)
(72) Inventor: AMAJJAHE, Sadik, 40591 Düsseldorf (DE); BENITEZ LIZARDO, Alejandro José, 45130 Essen (DE); BLÉGER, David, 40235 Düsseldorf (DE); BÜHNING, Kim, 45701 Herten (DE); DIMMERLING, Maik, 45657 Recklinghausen (DE); EGER, Christian, 21357 Bardowick (DE); HENNING, Frauke, 45259 Essen (DE); PREUSS, Susann, 40227 Düsseldorf (DE); WILLY, Benjamin, 40211 Düsseldorf (DE); WUNNICKE, Odo, 48161 Münster (DE)
(74) Representative: Evonik Patent Association
(86) International application number: PCT/EP2022/050594
(87) International publication number: WO 2022/152775

(56) References cited:
- CN-A- 109 337 638
- KR-A- 20170 128 955

## Description

The invention relates to silicone urethane (meth)acrylates, particularly having at least three (meth)acrylate groups and not more urethane groups than (meth)acrylate groups, methods for preparing said silicone urethane (meth)acrylates, compositions comprising said silicone urethane (meth)acrylates, and their use in the production of release coatings, protective films, protective coatings as well as their use in the manufacturing of 3D printed objects by means of stereolithography.

The use of silicone urethane (meth)acrylates as components of 3D printing resins and coating compositions is known in the prior art.

KR 20170128955 A discloses silicone urethane (meth)acrylates as photocurable polymers for 3D printing. In example 1 a silicone urethane acrylate is prepared by reaction of 1 mole of a hydroxy-terminated polydimethylsiloxane with 2 moles of hexamethylene diisocyanate (HDI) and subsequently 2 moles of hydroxyethyl acrylate (HEA). In example 2 a silicone urethane acrylate is prepared in the same manner but with isophorone diisocyanate (IPDI) instead of HDI. These silicone urethane acrylates of examples 1 and 2 have two acrylate groups and four urethane groups. In example 3 a silicone urethane methacrylate is prepared by reacting 1 mole of a hydroxy-terminated polydimethylsiloxane with 2 moles 2-isocyanatoethyl methacrylate, which is a hazardous and toxic compound. The polymer of example 3 has two methacrylate groups and two urethane groups. It is further described that these photo-curable polymers are flexible, have a high photo-curing speed and are easy to process.

CN 106519182 A discloses silicone urethane acrylates for use in the field of release coatings. The silicone urethane acrylates are prepared by a method comprising the following steps:
(1) reacting an organosilicon glycol and a diisocyanate in such proportions that the molar ratio of hydroxyl groups to isocyanato groups is 1:2,
(2) reacting hydroxyethyl acrylate or hydroxyethyl methacrylate with the prepolymer obtained in step (1) in such proportions that the molar ratio of hydroxyl groups to isocyanato groups is 1:1. The organosilicon glycol is a chain-type silicon glycol with an organic group comprising two hydroxyl groups at one of its chain ends. The diisocyanates are preferably selected from toluene diisocyanate, hexamethylene diisocyanate or isophorone diisocyanate. The obtained silicone urethane acrylates have two (meth)acrylate groups and four urethane groups.

CN109577077A relates to a method for preparing a self-adhesive release paper by means of electron beam curing. The release paper comprises a base paper layer and a release coating, the latter of which is obtained by electron beam curing of a release coating composition containing 50 to 100 parts of a silicone modified urethane acrylate, 0 to 50 parts of silicone modified polyacrylate and 10 to 20 parts of reactive diluent.

However, the silicone urethane (meth)acrylates known in the art usually show only a moderate photocuring rate or are highly viscous or even solid at room temperature, which makes them difficult to process. To improve their processability, the processing of the silicone urethane (meth)acrylates is carried out at higher temperatures or larger amounts of solvents or reactive diluents are added, which in turn can lead to other drawbacks such as an increased energy consumption, additional process steps to remove the solvent and/or possible adverse effects on the desired properties of the cured product. It is also preferred that the curing rate is high and curing depth is increased, to accelerate the processing. Furthermore, it is preferred, that the cured products are flexible and have good mechanical properties such as a high elongation at break. It is also preferred, that the cured product is an elastomeric material, i.e. the product should return to its original shape after deformation, such as elongation. The surface of the cured product should be smooth and have good release properties. It is also required, that highly toxic or highly hazardous compounds are avoided in the synthesis of the silicone urethane (meth)acrylates.

Therefore, there is still a need to provide silicone urethane (meth)acrylates that have advantages over the prior art. Consequently, the problem addressed by the present invention was therefore that of overcoming at least one disadvantage of the prior art.

It has been found, surprisingly, that the subject-matter of the independent claims overcomes at least one disadvantage of the prior art.

The object of the present invention is therefore achieved by the subject-matter of the independent claims. Preferred embodiments of the invention are specified in the dependent claims, the examples and the description.

According to a first aspect of the invention, there is provided a silicone urethane (meth)acrylate having
- at least three (meth)acrylate groups, and
- not more urethane groups than (meth)acrylate groups, preferably just as many urethane groups as (meth)acrylate groups.

According to a second aspect of the invention, there is provided a silicone urethane (meth)acrylate, preferably also according the first aspect of the invention, comprising groups of Formula (A): 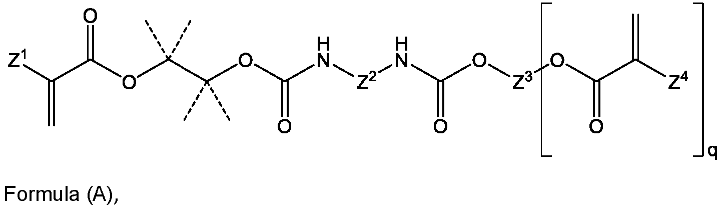 where
- Z¹: is in each case independently selected from the group consisting of CH₃ or H, preferably H;
- Z²: is a divalent organic radical, preferably an alkylene radical, preferably an alkylene radical derived from isophorone diisocyanate as a diisocyanate of OCN-Z²-CNO;
- Z³: is a (q+1)-valent organic radical where q is an integer from 1 to 3 organic radical, preferably an alkylene radical, in preferably -(C₂H₄)-;
- Z⁴: is in each case independently selected from the group consisting of -CH₃ and -H, preferably H;
and wherein each dotted line denotes a covalent bond and at least one of said dotted lines denote a covalent bond to an organic radical which itself has a covalent bond to a silicon atom.

According to a third aspect of the invention, there is provided a method for preparing said silicone urethane (meth)acrylates wherein said silicone urethane (meth)acrylates are formed by reaction of at least one hydroxy functional silicone (meth)acrylate with at least one isocyanate functional urethane (meth)acrylate.

According to a fourth aspect of the invention, there is provided a composition comprising or consisting of the following components:
(a) at least one silicone urethane (meth)acrylates according to the invention;
(b) optionally at least one organic (meth)acrylate not having any silicon atoms;
(c) optionally at least one silicone (meth)acrylate not having any urethane groups;
(d) optionally at least one curing catalyst;
(e) optionally at least one additive;
(f) optionally at least one solvent.

According to a fifth aspect of the invention, there is provided a method for preparing said composition comprising the steps:
(i) preparing a mixture of component (a) and component (f);
(ii) preparing a mixture by adding at least one of the components (b) to (e), preferably component (b) and/or (c), to the mixture of step (i);
(iii) (essentially) removing the component (f) from the mixture of step (ii);
(iv) optionally preparing a mixture by adding at least one of the components (b) to (e) to the mixture of step (iii), if that said component(s) have not been added in step (ii).

According to a fifth aspect of the invention, there is provided a release coating, a protective film or a protective coating obtainable by curing said composition or a 3D printed object obtainable by 3D printing said composition.

As used herein, the singular forms "a", "an" and "the" include plural referents unless the context clearly dictates otherwise.

The terms "comprising" and "comprises" as used herein are synonymous with "including", "includes", "containing" or "contains", and are inclusive or open-ended and do not exclude additional, non-recited members, elements or method steps.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Where numerical ranges in the form "X to Y" are reported hereinafter, where X and Y represent the limits of the numerical range, this is synonymous with the statement "from at least X up to and including Y", unless otherwise stated. Statements of ranges thus include the range limits X and Y, unless stated otherwise.

The words "preferred" and "preferably" are used frequently herein to refer to embodiments of the disclosure that may afford particular benefits, under certain circumstances. However, the recitation of one or more preferable or preferred embodiments does not imply that other embodiments are not useful and is not intended to exclude those other embodiments from the scope of the disclosure.

Where measurement values, parameters or material properties determined by measurement are reported hereinafter, these are, unless otherwise stated, measurement values, parameters or material properties which are measured at 25°C and preferably at a pressure of 101 325 Pa (standard pressure).

As used herein, room temperature (RT) is 23°C ± 2°C.

The expression "(meth)acrylic" stands for "methacrylic" and/or "acrylic". Accordingly, the expression "(meth)acrylate" stands for "methacrylate" and/or "acrylate". As used herein, an "acrylate" refers to an "acrylic acid ester" and "methacrylate" refers "methacrylic acid ester".

In the context of this invention, silicone urethane (meth)acrylates are understood to mean organosiloxanes containing urethane groups and bearing methacrylic ester groups and/or acrylic ester groups, also referred to below as (meth)acrylic ester groups. Organosiloxanes are also referred to hereinafter simply as siloxanes.

An organosiloxane is understood to mean a compound having organic radicals bonded to silicon atoms and also structural units of the formula =Si-O-Si=, where "≡" represents the three remaining valencies of the silicon atom in question. The organosiloxanes are preferably compounds composed of units selected from the group consisting of M = [R₃SiO_{1/2}], D = [R₂SiO_{2/2}], T = [RSiO_{3/2}] and which optionally also have units of the formula Q = [SiO_{4/2}], where R is a monovalent organic radical. The radicals R may each be selected independently of one another here and are identical or different when compared in pairs. The radicals R can also be replaced in part by non-organic monovalent radicals such as hydroxyl groups or chlorine for example. Cited as a reference in relation to the M, D, T, Q nomenclature used herein to describe the structural units of organosiloxanes is W. Noll, Chemie und Technologie der Silicone [Chemistry and Technology of the Silicones], Verlag Chemie GmbH, Weinheim (1960), page 2 ff*.*

The various repeating units in the Formulae (C), (F), (Q) and (S) below may be in a statistical distribution. Statistical distributions may have a blockwise structure with any number of blocks and any sequence or they may be subject to a randomized distribution; they may also have an alternating structure or else form a gradient along the chain, if there is one; in particular, they can also form any mixed forms thereof in which groups of different distributions may optionally follow one another. Specific embodiments may be defined hereinafter in that features such as indices or structural constituents or ranges or statistical distributions are subject to restrictions by virtue of the embodiment. All other features that are not affected by the restriction remain unchanged.

Wherever molecules/molecule fragments have one or more stereocenters (stereogenic center) or can be differentiated into isomers on account of symmetries or can be differentiated into isomers on account of other effects, for example restricted rotation, all possible isomers are included by the present invention.

The molecular weights given in the present text refer to number average molecular weights (Mₙ), unless otherwise stipulated. All molecular weight data refer to values obtained by gel permeation chromatography (GPC) as described in the examples.

Where documents are cited within the context of the present description, the entire content thereof is intended to be part of the disclosure content of the present invention.

In a first aspect of the present invention there is provided a silicone urethane (meth)acrylate having
- at least three (meth)acrylate groups, and
- not more urethane groups than (meth)acrylate groups, preferably just as many urethane groups as (meth)acrylate groups.

It is preferred that the silicone urethane (meth)acrylate has m (meth)acrylate groups and n urethane groups, where
- m: is an integer of at least 3, preferably from 3 to 5, more preferably 4;
- n: is an integer of at least 2, preferably from 2 to 4, more preferably 4; with the proviso that m ≥ n, preferably m = n.

Examples of possible combinations (m;n) of m (meth)acrylate groups and n urethane groups include, but are not limited to, (3;1), (3;2), (3;3), (4;1), (4;2), (4;3), (4;4), (5;1), (5;2), (5;3), (5;4), (5;5); (6;1), (6;2), (6;3), (6;4), (6;5) or (6;6); preferably (3;2), (3;3), (4;2), (4;3), (4;4), (5;2), (5;3), (5;4) or (5;5), particularly preferably (4;4).

It is preferred, that the silicone urethane (meth)acrylate is represented by Formula (B),

X(-Y)ₚ Formula (B),

where
- X: is a p-valent silicone radical;
- Y: is bonded to a silicon atom of the silicone radical, and
is in each case independently selected from the group consisting of monovalent organic radicals having at least one urethane group and at least one (meth)acrylate group,
is preferably in each case independently selected from the group consisting of monovalent organic radicals having two (meth)acrylate groups and one or two urethane groups,
is more preferably in each case independently selected from the group consisting of monovalent organic radicals having two (meth)acrylate groups and two urethane groups;
- p: is an integer of at least 1, preferably from 2 to 4, more preferably 2.

The silicone radical can be linear, branched, cyclic or combinations thereof. It is preferred that the silicone radical is linear. It is particularly preferred that silicone radical is a divalent polydimethylsiloxane radical.

It is preferred that the silicone urethane (meth)acrylate comprises units represented by Formula (C),

[RₐY_{b}SiO_{(4-a-b)/2}] Formula (C),

where
- a: is an integer and from 0 to 2, preferably 1 or 2;
- b: is an integer and from 1 to 3, preferably 1; with the proviso that a+b is from 1 to 3;
- R: is in each case independently selected from the group consisting of monovalent organic radicals not having any urethane groups,
is preferably in each case independently selected from the group consisting of monovalent hydrocarbon radicals having 1 to 30 carbon atoms,
is more preferably a methyl radical;
- Y: is as defined above.

Preferably, the silicone urethane (meth)acrylate has exactly two units represented by Formula (C) as defined above, and it is particularly preferred, that each of these units bear two radicals R and one radical Y, i.e. it is particularly preferred, that a = 2 and b = 1.

In a further aspect of the invention there is provided a silicone urethane (meth)acrylate comprising groups of Formula (A), which is preferably also a silicone urethane (meth)acrylate according to the first aspect of the invention, more preferably contained in said radical Y: 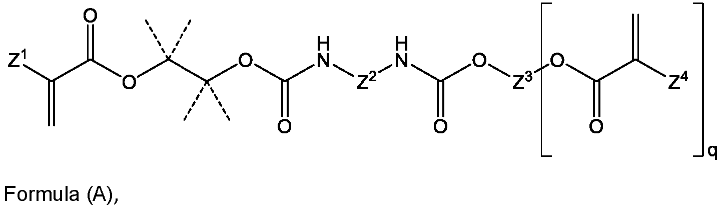 where
- Z¹: is in each case independently selected from the group consisting of CH₃ or H, preferably H;
- Z²: is a divalent organic radical, preferably an alkylene radical, preferably an alkylene radical derived from isophorone diisocyanate as a diisocyanate of OCN-Z²-CNO;
- Z³: is a (q+1)-valent organic radical where q is an integer from 1 to 3 organic radical, preferably an alkylene radical, in preferably -(C₂H₄)-;
- Z⁴: is in each case independently selected from the group consisting of -CH₃ and -H, preferably H;
and wherein each dotted line denotes a covalent bond and at least one of said dotted lines denote a covalent bond to an organic radical which itself has a covalent bond to a silicon atom.

Examples for covalent bonds which are represented by the dotted lines are bonds to hydrogen radicals or to organic radicals such as alkyl radicals or alkylene radicals, which may be linear, branched or cyclic, and optionally interrupted by oxygen atoms. Preferably, at least one of said dotted lines denote a covalent bond to an organic radical which itself has a covalent bond to a silicon atom, wherein said organic radical is a divalent hydrocarbon radical which may be interrupted by oxygen atoms.

It is preferred, that Z² is in each case independently selected from the group of divalent, saturated or unsaturated, linear or branched or cyclic hydrocarbon radicals with 1 to 30 carbon atoms. Z² may be a residue of a diisocyanate of the formula OCN-Z²-CNO (Formula (D)). The term "residue of a diisocyanate" is herein defined as the molecular structure of a diisocyanate wherein all isocyanate groups are removed. Examples of suitable diisocyanates are given below. It is particularly preferred that Z² is a divalent radical derived from a diisocyanate of formula OCN-Z²-CNO, wherein said diisocyanate is IPDI.

It is preferred, that Z³ is in each case independently selected from the group of (q+1)-valent, saturated or unsaturated, linear or branched or cyclic hydrocarbon radicals with 2 to 30 carbon atoms. Z³ may be a residue of a hydroxy functional (meth)acrylates of Formula (E),

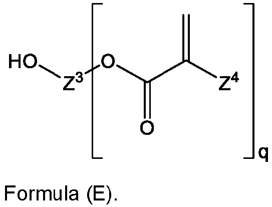

Examples of suitable hydroxy functional (meth)acrylates are given below. Particularly preferred is hydroxyethyl acrylate.

It is preferred, that the silicone urethane (meth)acrylate it is represented by Formula (F),

Mₘ₁M^{UA}ₘ₂M^{A}ₘ₃D_{d1}D^{UA}_{d2}D^{A}_{d3}TₜQ_{q} Formula (F),

where
- M =: [R₃SiO_{1/2}];
- M^{UA} =: [R₂(R^{UA})SiO_{1/2}];
- M^{A} =: [R₂(R^{A})SiO_{1/2}];
- D =: [R₂SiO_{2/2}];
- D^{UA} =: [R(R^{UA})SiO_{2/2}];
- D^{A} =: [R(R^{A})SiO_{2/2}];
- T =: [RSiO_{3/2}];
- Q =: [SiO_{4/2}];

- m1: is an integer from 0 to 32, preferably from 0 to 22, more preferably 0;
- m2: is an integer from 0 to 32, preferably from 1 to 10, more preferably 2;
- m3: an integer from 0 to 32, preferably from 0 to 22, more preferably 0;
- d1: is an integer from 1 to 1000, preferably from 5 to 500, more preferably from 10 to 400;
- d2: is an integer from 0 to 10, preferably from 0 to 5, more preferably 0;
- d3: is an integer from 0 to 10, preferably from 0 to 5, more preferably 0;
- t: is an integer from 0 to 10, preferably from 0 to 5, more preferably from 1 to 5;
- q: is an integer from 0 to 10, preferably from 0 to 5, more preferably from 1 to 5;
with the proviso that:
- m1+m2+m3: is at least 2, preferably from 2 to 20, more preferably from 2 to 10;
- m2+d2: is at least 1, preferably from 2 to 10, more preferably from 2 to 6;
in which
- R: is in each case independently selected from the group consisting of monovalent organic radicals not having any urethane groups or (meth)acrylate groups,
is preferably in each case independently selected from the group consisting of monovalent hydrocarbon radicals having 1 to 30 carbon atoms,
is more preferably a methyl radical;
- R^{UA}: is in each case independently selected from the group consisting of monovalent organic radicals having at least one (meth)acrylate group and at least one urethane group,
is preferably in each case independently selected from the group consisting of monovalent organic radicals having two (meth)acrylate groups and one or two urethane groups,
is more preferably in each case independently selected from the group consisting of monovalent organic radicals represented by Formula (G), 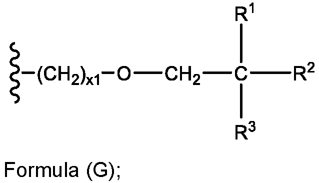
- x1: is an integer from 1 to 3, preferably 3;
- R¹: is in each case independently selected from the group consisting of a hydrogen radical, monovalent hydrocarbon radicals with 1 to 6 carbon atoms, R² and R³;
is preferably in each case independently selected from the group consisting of a hydrogen radical and monovalent hydrocarbon radicals having 1 to 6 carbon atoms;
is more preferably a hydrogen radical;
- R²: is in each case independently selected from the group consisting of a hydrogen radical, R³ and monovalent organic radicals having at least one (meth)acrylate group;
is preferably in each case independently selected from the group consisting of R³ and monovalent organic radicals having at least one (meth)acrylate group;
is more preferably in each case independently selected from monovalent radicals of Formula (H) 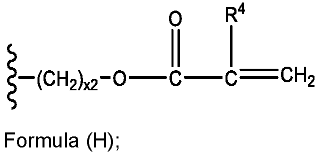
- x2: = (1-x3);
- R³: is in each case independently selected from the group consisting of monovalent organic radicals having at least one urethane group and at least one (meth)acrylate group;
is preferably in each case independently selected from the group consisting of monovalent organic radicals having exactly two urethane groups and exactly one (meth)acrylate group;
is more preferably in each case independently selected from the group consisting of monovalent organic radicals of Formula (I), 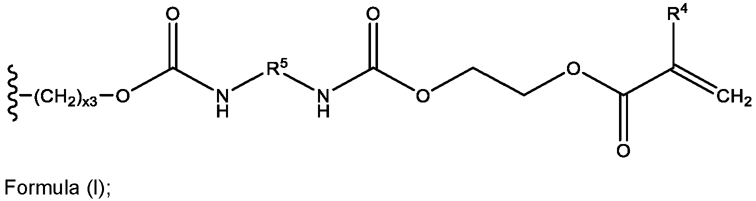
- x3: is an integer selected from 0 or 1, preferably 0;
- R⁴: is in each case independently selected from a hydrogen radical or a methyl radical, is preferably a hydrogen radical;
- R⁵: is in each case independently selected from the group of divalent, saturated or unsaturated, linear or branched or cyclic hydrocarbon radicals with 1 to 30 carbon atoms;
is preferably a divalent radical of Formula (J), 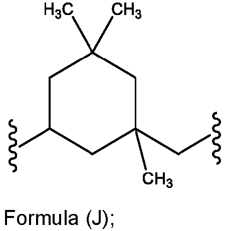
- R^{A}: is in each case independently selected from the group consisting of monovalent organic radicals having at least one (meth)acrylate group but no urethane group;
is preferably in each case independently selected from the group consisting of monovalent radicals represented by Formula (K) or (L);
is more preferably in each case independently selected from the group consisting of monovalent radicals represented by Formula (K); 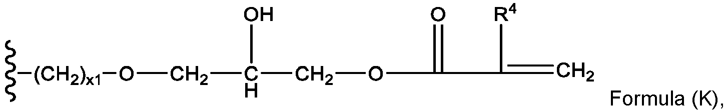 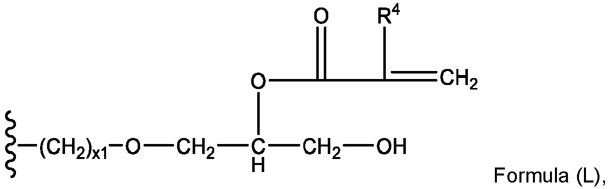
in which x1 and R⁴ are as defined above.

It is further preferred, that the radical R^{UA} or Y, respectively, is represented by at least one of Formulae (M), (N), (O) and (P):

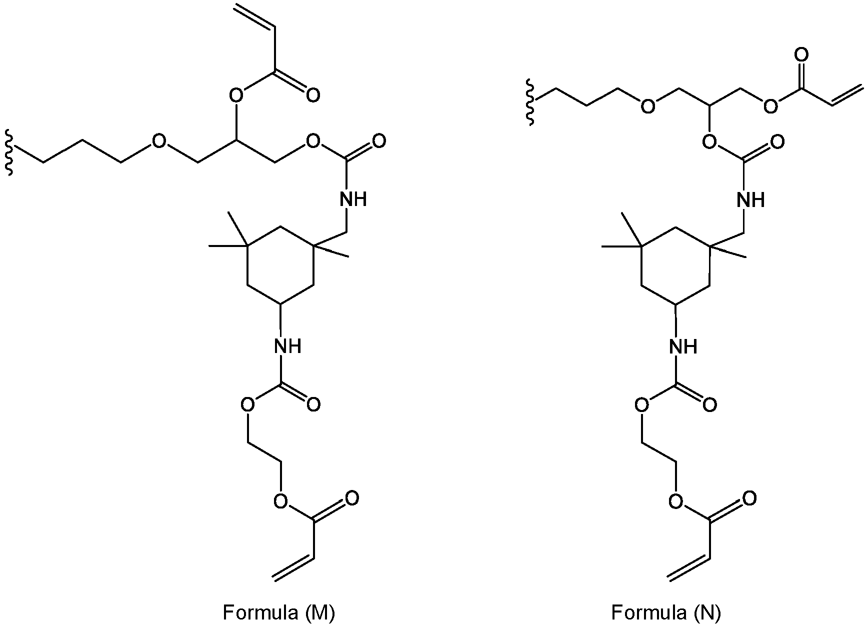

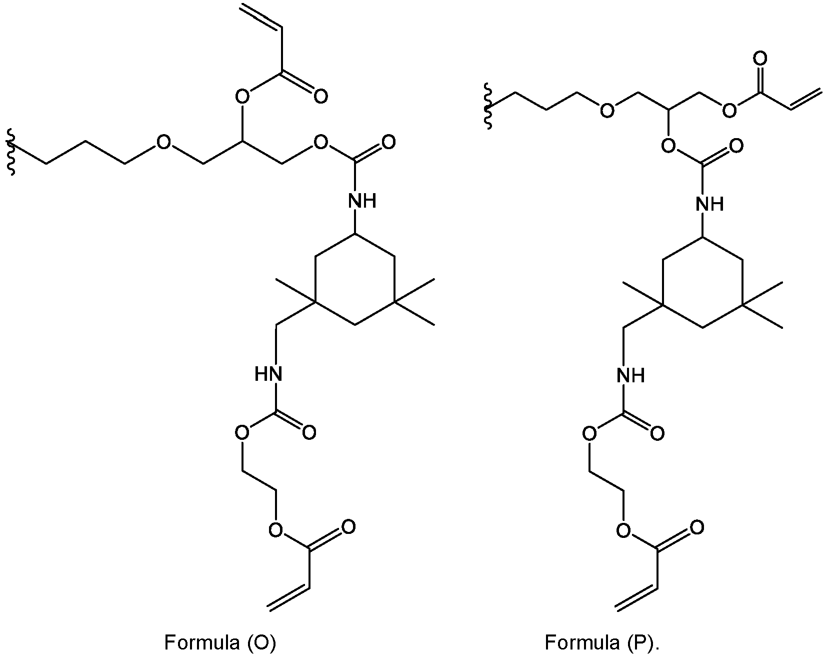

Preferably the following applies for silicone urethane (meth)acrylate according Formula (F):
m1 = d2 = t = q = 0;
m2 = 2; and
d1 is from 1 to 1000, preferably from 5 to 500, more preferably from 10 to 400, yet more preferably from 20 to 100.

It is preferred, that the (meth)acrylate groups of the silicone urethane (meth)acrylate are acrylate groups.

Preferably, the silicone urethane (meth)acrylate of the present invention does not contain groups containing a moiety of the formula -(C=O)-NH- other than urethane groups.

It is preferred, that the silicone urethane (meth)acrylate has a viscosity at 25 °C of below 200 Pa·s, preferably of from 0.5 to 150 Pa·s, more preferably of from 10 to 100 Pa·s The glass transition temperature is preferably determined as described in the examples.

It is preferred, that the silicone urethane (meth)acrylate has a weight-average molecular weight Mw of from 1000 to 20000 g/mol, preferably of from 2000 to 15000 g/mol, more preferably of from 3000 to 10000 g/mol. The weight-average molecular weight is preferably determined as described in the examples.

It is preferred, that the silicone urethane (meth)acrylate has a number-average molecular weight Mn from 1000 to 10000 g/mol, preferably from 1500 to 7500 g/mol more preferably from 2000 to 5000 g/mol. The weight-average molecular weight is preferably determined as described in the examples.

It is preferred, that the cured silicone urethane (meth)acrylate has a glass transition temperature (T_{g}) of below 100 °C, preferably of from 20 to 80 °C, more preferably of from 40 to 70 °C. The glass transition temperature is preferably determined by differential scanning calorimetry (DSC) in accordance with the DSC method DIN 53765 at a heating rate of 10 K/min.

The silicone urethane (meth)acrylates can be prepared by a method comprising the steps:
(1) reacting at least one hydroxy functional silicone (meth)acrylate and at least one diisocyanate under formation of at least one urethane group to obtain an isocyanate functional prepolymer;
(2) reacting at least one hydroxy functional (meth)acrylate with the isocyanate functional prepolymer obtained in step (1) under formation of at least one urethane bond.

The skilled person knows how to carry out the reaction and to choose suitable reactions conditions to achieve a high yield, as e.g. described in in KR 20170128955 A and CN 106519182 A. It is for instance preferred, that the molar ratio of hydroxyl groups to isocyanato groups is about 1:2 in step (1) and about 1:1 in step (2).

Surprisingly, an alternative method to produce silicone urethane (meth)acrylates is much more favourable. According to this method a hydroxy functional silicone (meth)acrylate is reacted an isocyanate functional urethane (meth)acrylate. By this applying this method the viscosity can be further reduced.

Therefore, a further aspect of the invention is a method for preparing silicone urethane (meth)acrylates wherein said silicone urethane (meth)acrylates are formed by reaction of at least one hydroxy functional silicone (meth)acrylate with at least one isocyanate functional urethane (meth)acrylate.

The reaction of a hydroxy functional silicone (meth)acrylate with an isocyanate functional urethane (meth)acrylate entails a reaction of the free NCO groups with hydroxyl groups and has already been frequently described (WO 2010/072439 A1 and references cited therein). This reaction may take place either with but also without solvent. It is carried out generally in a temperature range between 40°C and 80°C. The reaction takes generally 4 to 8 hours. It can be catalysed advantageously by common catalysts known within urethane chemistry, such as organometallic compounds and tertiary amines. Examples of suitable organometallic compounds are dibutyltin dilaurate (DBTL), dibutyltin dineodecanoate, zinc octoate, and bismuth neodecanoate. Examples for suitable tertiary amines are triethylamine or diazobicyclooctane.

Suitable reaction assemblies include all customary apparatus, tanks, static mixers, extruders, etc., preferably assemblies which possess a mixing or stirring function. The NCO/OH ratio is typically from 2:1 to 1:2, preferably from 1.5:1 to 1:1.5, and more preferably 1:1. The reaction might be conducted in the presence of a solvent, preferably without the presence of a solvent. A suitable solvent is for example acetone. It might be advantageous to conduct the reaction in the presence of an antioxidant/polymerization inhibitor to avoid a polymerization of the (meth)acrylate groups. The inhibitor can be added to the reaction mixture together with the isocyanate functional urethane (meth)acrylate that can react with the hydroxyl-group of the hydroxy functional silicone (meth)acrylate. If a solvent is used, the solvent may preferably be removed after the completion of the reaction, preferably under vacuum, or it may be removed after the preparation of the composition according to the invention.

Examples of hydroxy functional silicone (meth)acrylates which can be used to prepare the silicone urethane (meth)acrylates of the invention are also known to the person skilled in the art. It is preferred, that said hydroxy functional silicone (meth)acrylate is formed by reaction of at least one epoxy functional silicone with (meth)acrylic acid and/or at least one hydroxy functional (meth)acrylate. It is even more preferred, that said hydroxy functional silicone (meth)acrylate is formed by reaction of at least one epoxy functional silicone with methacrylic acid and/or acrylic acid, in particular acrylic acid. This is described in US 4,978,726 A and references cited therein. Examples for suitable hydroxy functional (meth)acrylates which can be employed are the same as can be used for the synthesis the isocyanate functional urethane (meth)acrylates as described below.

Examples of isocyanate functional urethane (meth)acrylates which can be used to prepare the silicone urethane (meth)acrylates of the invention are also known from prior art and described e.g. in WO 2010/072439 A1 and in WO 2010/115644 A1. Commercially available isocyanate functional urethane (meth)acrylates which can be employed are e.g. VESTANAT^{®} EP DC-1241 (available from Evonik Industries AG, Germany). The isocyanate functional urethane (meth)acrylate may be prepared by reaction of a diisocyanate with a hydroxy functional (meth)acrylate under formation of a urethane bond as described in WO 2010/072439 A1.

Preferred diisocyanates are aliphatic, cycloaliphatic, and araliphatic - i.e., aryl-substituted aliphatic - diisocyanates, as are described in, for example, Houben-Weyl, Methoden der organischen Chemie, Volume 14/2, on pages 61 to 70, and in the article by W. Siefken in Justus Liebigs Annalen der Chemie 562, on pages 75 to 136, such as 1,2-ethylene diisocyanate, 1,4-tetramethylene diisocyanate, 1,6-hexamethylene diisocyanate (HDI), 2,2,4-trimethyl-1,6-hexamethylene diisocyanate (TMDI), 2,4,4-trimethyl-1,6-hexamethylene diisocyanate (TMDI), 1,9-diisocyanato-5-methylnonane, 1,8-diisocyanato-2,4-dimethyloctane, 1,12-dodecane diisocyanate, ω,ω'-diisocyanatodipropyl ether, cyclobutene 1,3-diisocyanate, cyclohexane 1,3-diisocyanate, cyclohexane 1,4-diisocyanate, 3-isocyanatomethyl-3,5,5-trimethylcyclohexyl isocyanate (isophorone diisocyanate, IPDI), 1,4-diisocyanatomethyl-2,3,5,6-tetramethylcyclohexane, decahydro-8-methyl-(1,4-methano-naphthalen)-2,5-ylenedimethylene diisocyanate, decahydro-8-methyl-(1,4-methano-naphthalen)-3,5-ylenedimethylene diisocyanate, hexahydro-4,7-methanoindan-1,5-ylenedimethylene diisocyanate, hexahydro-4,7-methanoindan-2,5-ylenedimethylene diisocyanate, hexahydro-4,7-methanoindan-1,6-ylenedimethylene diisocyanate, hexahydro-4,7-methanoindan-2,5-ylenedimethylene diisocyanate, hexahydro-4,7-methanoindan-1,5-ylene diisocyanate, hexahydro-4,7-methanoindan-2,5-ylene diisocyanate, hexahydro-4,7-methanoindan-1,6-ylene diisocyanate, hexahydro-4,7-methanoindan-2,6-ylene diisocyanate, 2,4-hexahydrotolylene diisocyanate, 2,6-hexahydrotolylene diisocyanate, 4,4'-methylenedicyclohexyl diisocyanate (4,4'-H₁₂MDI), 2,2'-methylenedicyclohexyl diisocyanate (2,2'-H₁₂MDI), 2,4-methylenedicyclohexyl diisocyanate (2,4-H₁₂MDI) or else mixtures, 4,4'-diisocyanato-3,3',5,5'-tetramethyldicyclohexylmethane, 4,4'-diiso-cyanato-2,2',3,3',5,5',6,6'-octamethyldicyclohexylmethane, ω,ω'-diisocyanato-1,4-diethylbenzene, 1,4-diisocyanatomethyl-2,3,5,6-tetramethylbenzene, 2-methyl-1,5-diisocyanatopentane (MPDI), 2-ethyl-1,4-diisocyanatobutane, 1,10-diisocyanatodecane, 1,5-diisocyanatohexane, 1,3-diisocyanatomethylcyclohexane, 1,4-diisocyanatomethylcyclohexane, and any desired mixtures of these compounds. Further suitable isocyanates are described in the aforementioned article in Justus Liebigs Annalen der Chemie on page 122 f. Also preferred are 2,5-bis(isocyanatomethyl)bicyclo[2.2.1]heptane (NBDI) and/or 2,6-bis(isocyanatomethyl)bicyclo[2.2.1]heptane (NBDI). With particular preference the aliphatic and cycloaliphatic diisocyanates that are readily accessible industrially, such as IPDI, HDI, and H₁₂MDI, for example, and also their isomer mixtures, are used, in particular IPDI. Said diisocyanates are embodiments of the diisocyanates of Formula (D) as given above.

Preferred hydroxy functional (meth)acrylates are all compounds which carry not only at least one methacrylate or acrylate function but also exactly one hydroxyl group. Further constituents may be aliphatic, cycloaliphatic, aromatic or heterocyclic alkyl groups. Oligomers or polymers are also conceivable. Preference is given to readily accessible products such as, for example, hydroxyethyl acrylate, hydroxypropyl acrylate, hydroxybutyl acrylate, and hydroxyethyl methacrylate, hydroxypropyl methacrylate, hydroxybutyl methacrylate, glycerol diacrylate, pentaerythritol triacrylate, trimethylolpropane diacrylate, glycerol dimethacrylate, pentaerythritol trimethacrylate, and trimethylolpropane dimethacrylate, and also hydroxylethyl vinyl ether, hydroxypropyl vinyl ether, hydroxylbutyl vinyl ether, hydroxypentyl vinyl ether, and hydroxyhexyl vinyl ether. Particularly preferred is hydroxyethyl acrylate. It also possible to use mixtures of two or more of these hydroxy functional (meth)acrylates. Said hydroxy functional (meth)acrylates are embodiments of the hydroxy functional (meth)acrylates of Formula (E) as given above.

The silicone urethane (meth)acrylates according to the invention are typically used as a component in composition for various applications.

Therefore, a further aspect of the invention is a composition comprising or (essentially) consisting of the following components:
(a) at least one silicone urethane (meth)acrylate according to the invention and/or prepared by the method according to the invention,
(b) optionally at least one organic (meth)acrylate not having any silicon atoms;
(c) optionally at least one silicone (meth)acrylate not having any urethane groups;
(d) optionally at least one curing catalyst;
(e) optionally at least one additive.

It is preferred, that said composition comprises or (essentially) consist of:
- from 5 to 100, preferably from 5 to 20, more preferably from 10 to 20 % by weight at least of component (a);
- from 0 to 60, preferably from 0 to 30, more preferably from 5 to 15 % by weight at least of component (b);
- from 0 to 95, preferably from 65 to 85, more preferably from 70 to 80 % by weight at least of component (c);
- from 0 to 5, preferably from 0.1 to 3, more preferably from 0.5 to 2.5 % by weight of component (d);
- from 0 to 20, preferably from 0 to 10, more preferably from 0 to 5 % by weight of component (e);
- from 0 to 10, preferably from 0 to 5, more preferably from 0 to 1 % by weight of component (f);
based on the total weight of the sum of components (a) to (e) and/or based on the total weight of the composition, preferably based on the total weight of the composition.

The one or more silicone urethane (meth)acrylates according to the invention are also denoted herein as component (a).

It is preferred, that the amount of silicone urethane (meth)acrylate(s) (component (a)) present in the composition of the invention is from 5 to 100 % by weight, preferably from 5 to 20 % by weight, and more preferably from 10 to 20 % by weight based on the total weight of the sum of components (a) to (e) and/or based on the total weight of the composition, preferably based on the total weight of the composition.

It is preferred, that the composition according to the present invention further comprises a component (b). Component (b) can be used as a reactive diluent to decrease and adjust the viscosity of the composition. Alternatively, component (b) can be used as a crosslinker. Component (b) of the composition consists of one or more organic (meth)acrylate not having any silicon atoms. The organic (meth)acrylate, accordingly, is free of silicon atoms. It is preferred, that the organic (meth)acrylate only consists of the elements carbon, hydrogen, oxygen and nitrogen.

It is also preferred, that organic (meth)acrylate has 2 to 6 (meth)acrylate group. Such compounds are described in European Coatings Tech Files, Patrick Glöckner et al. "Radiation Curing: Coatings and Printing Inks", 2008, Vincentz Network, Hanover, Germany.

Particularly preferred organic (meth)acrylates are disclosed in WO 2016/096595 A1 and WO 2018/001687 A1. Examples of organic (meth)acrylates can be selected from, but are not limited to, the group consisting of trimethylolpropane triacrylate (TMPTA), tripropylene glycol diacrylate (TPGDA), dipropylene glycol diacrylate (DPGDA), isobornyl acrylate (IBOA), lauryl acrylate, 1,6-hexanediol diacrylate (HDDA), tridecyl acrylate, pentaerythritol triacrylate, pentaerythritol tetraacrylate, propoxylated glyceryl triacrylate, polyethylene glycol diacrylate, and their ethoxylated and/or propoxylated derivates.

Suitable organic (meth)acrylates are also available commercially under the tradename Ebecryl^{®} TMPTA (Allnex SA, Germany), Ebecryl^{®} OTA480 (a propoxylated glyceryl triacrylate, Allnex SA, Germany), Ebecryl^{®} TPGDA (Allnex SA, Germany), Ebecryl^{®} DPGDA (Allnex SA, Germany), Ebecryl^{®} 892 (Allnex SA, Germany), Ebecryl^{®} 11 (a polyethylene glycol 600 diacrylate with Mw 700 g/mol, Allnex SA, Germany), Ebecryl^{®} 45 (Allnex SA, Germany), PETIA (a mixture of pentaerythritol tri- and tetraacrylate, Allnex SA, Germany), Ebecryl^{®} 150 (a bisphenol A derivative diacrylate, Allnex SA, Germany), Ebecryl^{®} 605 (a mixture of 80% bisphenol A diepoxyacrylate and 20% TPGDA, Allnex SA, Germany), Ebecryl^{®} 40 (ethoxylated and propoxylated (1.2 propylene oxide and 5 ethylene oxide units in total) pentaerythritol tetraacrylate, Allnex SA, Germany), Laromer^{®} TMPTA (BASF, Germany), Miramer^{®} M200 (HDDA, Rahn AG, Germany), Miramer^{®} M220 (TPGDA, Rahn AG, Germany), Miramer^{®} 3130 (ethoxylated trimethylolpropane triacrylate (3 ethylene oxide units in total), Rahn AG, Germany), SR 415 (ethoxylated (20 ethylene oxide units in total) trimethylolpropane triacrylate, Sartomer, France), SR 489 (tridecyl acrylate, Sartomer, France).

Suitable organic (meth)acrylates are also available commercially from Evonik Industries AG (Germany) under the VISIOMER^{®} product line. Preferred compounds are glycerol formal methacrylate (VISIOMER^{®} GLYFOMA), diurethane dimethacrylate (VISIOMER^{®} HEMA TMDI), butyl diglycol methacrylate (VISIOMER^{®} BDGMA), polyethylenglycol 200 dimethacrylate (VISIOMER^{®} PEG200DMA), trimethylolpropane methacrylate (VISIOMER^{®} TMPTMA), tetrahydrofurfuryl methacrylate (VISIOMER^{®} THFMA), isobornyl methacrylate (VISIOMER^{®} Terra IBOMA), isobornyl acrylate (VISIOMER^{®} IBOA), a methacrylic ester of a fatty alcohol with 13.0 carbon atoms on average (VISIOMER^{®} Terra C13-MA) or a methacrylic ester of a fatty alcohol with 17.4 carbon atoms on average (VISIOMER^{®} Terra C17.4-MA).

The composition of the present invention more preferably comprises organic (meth)acrylates selected of the group consisting of isobornyl methacrylate (VISIOMER^{®} Terra IBOMA), isobornyl acrylate (VISIOMER^{®} IBOA), lauryl acrylate, Ebecryl^{®} 45, hexanediol diacrylate, and trimethylolpropane triacrylate.

It is preferred that the (meth)acrylate group(s) of the organic (meth)acrylate(s) (component (b)) silicone (meth)acrylate are acrylate groups.

It is also preferred that the (meth)acrylate group(s) of the organic (meth)acrylate(s) (component (b)) silicone (meth)acrylate are (meth)acrylate groups.

It is preferred, that the amount of organic methacrylate(s) (component (b)) present in the composition of the invention is from 0 to 60 % by weight, preferably from 0 to 30 % by weight, and more preferably from 5 to 15% by weight based on the total weight of the sum of components (a) to (e) and/or based on the total weight of the composition, preferably based on the total weight of the composition.

It is preferred, that the composition according to the present invention comprises a component (c). Component (c) consists of at least one silicone (meth)acrylate not having any urethane groups. The silicone (meth)acrylate is, accordingly, free of urethane groups.

It is preferred, at least one silicone (meth)acrylate of component (c) is represented by Formula (Q) and/or at least one silicone (meth)acrylate of component (c) is represented by Formula (S),

M^{A}ₘ₁D_{d1} Formula (Q);

where
- M^{A} =: [R₂(R^{A})SiO_{1/2}];
- D =: [R₂SiO_{2/2}];

- m1: is an integer of 2;
- d1: is an integer of from 1 to 10000, preferably from 50 to 5000, more preferably from 70 to 2000;
in which
- R: is in each case independently selected from the group consisting of monovalent organic radicals not having any urethane groups or (meth)acrylate groups,
is preferably in each case independently selected from the group consisting of monovalent hydrocarbon radicals having 1 to 30 carbon atoms,
is more preferably a methyl radical;
- R^{A}: is in each case independently selected from the group consisting of monovalent organic radicals having at least at least one (meth)acrylate group but no one urethane group;
is preferably in each case independently selected from the group consisting of monovalent radicals represented by Formula (R), 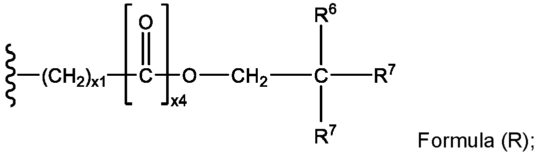
- x1: is as defined above;
- x4: is an integer and 0 or 1, preferably 0;
- R⁶: is in each case independently selected from the group consisting of monovalent hydrocarbon radicals with 1 to 6 carbon atoms;
is preferably an ethyl radical;
- R⁷: is in each case independently selected from the group consisting of monovalent organic radicals having at least one (meth)acrylate group but no urethane group;
is preferably in each case independently selected from monovalent radicals of Formula (H) as defined above;

Mₘ₁D_{d1}D^{A}_{d2}D^{AC}_{d3} Formula (S)

where
- M =: [R₃SiO_{1/2}];
- D =: [R₂SiO_{2/2}];
- D^{A} =: [R(R^{A})SiO_{2/2}];
- D^{AC} =: [R(R^{AC})SiO_{2/2}];
in which:
- R, m1 and d1: are as defined for Formula (Q) above;

- d2: is an integer from 1 to 20, preferably from 2 to 10, more preferably from 3 to 8;
- d3: is an integer from 0 to 3, preferably from 0 to 2, more preferably from 0 to 1;

- R^{A}: is in each case independently selected from the group consisting of monovalent organic radicals having at least one (meth)acrylate group but no urethane group;
is preferably in each case independently selected from the group consisting of monovalent radicals represented by Formula (K) or (L);
is more preferably in each case independently selected from the group consisting of monovalent radicals represented by Formula (K); 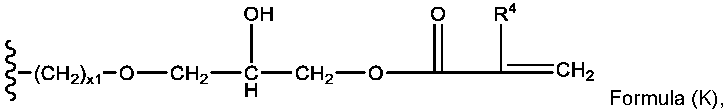 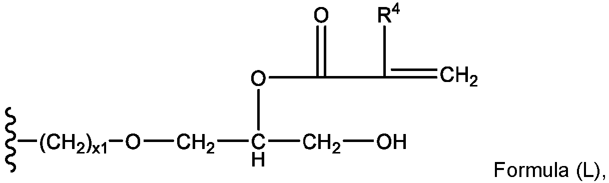
in which x1 and R⁴ are as defined above;
- R^{AC}: is in each case independently selected from the group consisting of monovalent organic radicals having at least one carboxylic acid ester group but no (meth)acrylate group and no urethane group;
is preferably in each case independently selected from the group consisting of monovalent radicals represented by Formula (T) or (U), 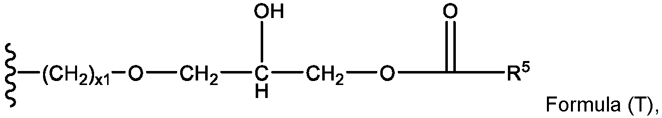 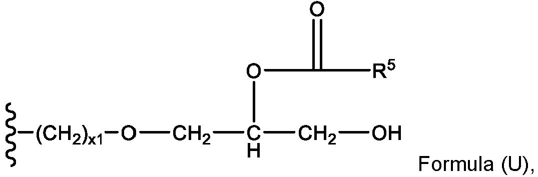
in which x1 is as defined as above;
- R⁵: is in each case independently selected from the group consisting of monovalent hydrocarbon radicals having 1 to 22 carbon atoms;
is preferably a methyl radical.

The at least one silicone (meth)acrylate of component (c), which is represented by Formula (Q), is denoted herein as component (c1). The at least one silicone (meth)acrylate of component (c), which is represented by Formula (S), is denoted herein as component (c2). Therefore, component (c) consists of a component (c1) and/or a component (c2), wherein component (c1) consists of at least one silicone (meth)acrylate represented by Formula (Q), and wherein component (c2) consists of at least one silicone (meth)acrylate represented by Formula (S).

Examples of silicone (meth)acrylates according to Formula (Q) (component (c1)) are known to the person skilled in the art and may be prepared as described in e.g. EP 0940422 A1.

Examples of silicone (meth)acrylates according to Formula (S) (component (c2)) are also known to the person skilled in the art and may be prepared as described in e.g. EP 3168273 A1 and WO 2017187030 A1.

It is preferred, that the amount of silicone (meth)acrylate(s) (component (c)) present in the composition of the invention is from 0 to 95 % by weight, preferably from 65 to 85 % by weight, and more preferably from 70 to 80 % by weight based on the total weight of the sum of components (a) to (e) and/or based on the total weight of the composition, preferably based on the total weight of the composition.

It is particularly preferred, that the amount of silicone (meth)acrylate(s) according to Formula (Q) (component (c1)) present in the composition of the invention is from 0 to 95 % by weight, preferably from 65 to 85 % by weight, and more preferably from 70 to 80 % by weight based on the total weight of the sum of components (a) to (e) and/or based on the total weight of the composition, preferably based on the total weight of the composition.

It is particularly preferred, that the amount of silicone (meth)acrylate(s) according to Formula (S) (component (c2)) present in the composition of the invention is from 0 to 95 % by weight, preferably from 65 to 85 % by weight, and more preferably from 70 to 80 % by weight based on the total weight of the sum of components (a) to (e) and/or based on the total weight of the composition, preferably based on the total weight of the composition.

It is preferred that the (meth)acrylate groups of the silicone (meth)acrylate, which is represented by Formula (Q) (component (c1)), are acrylate groups. In the same way it is preferred, that the (meth)acrylate groups of the silicone (meth)acrylate, which is represented by Formula (S) (component (c2)), are acrylate groups. It is more preferred that the (meth)acrylate groups of the silicone (meth)acrylate, which is represented by Formula (Q) (component (c1)), as well as the (meth)acrylate groups of the silicone (meth)acrylate, which is represented by Formula (S) (component (c1)), are acrylate groups.

It is particularly preferred that the (meth)acrylate groups of components (a), (b) and (c) (such as components (c1) and (c2)) are acrylate groups.

It is also particularly preferred that the (meth)acrylate groups of components (a) and (c) (such as (c1) and (c2)) are acrylate groups and the (meth)acrylate groups of component (b) are (meth)acrylate groups.

Component (d) of the composition according to the invention consists of one or more curing catalysts. It is preferred, that the curing catalyst is a compound that creates reactive species e.g. free radicals, cations or anions, more preferably radicals, when exposed to an external trigger such as actinic radiation, preferably UV light and/or visible light, or heat. Accordingly, the curing catalysts may be catalysts for photocuring (photoinitiators) or catalysts for thermal curing (thermal curing catalysts).

It might be advantageous to have one or more thermal curing catalysts present in the composition of the present invention. A thermal curing catalyst is a compound that creates reactive species e.g. free radicals, cations or anions when exposed to heat. It is preferred that the thermal curing catalyst include organic peroxides, such as 2,5-bis(tert-butylperoxy)-2,5-dimethylhexane (e.g., LUPEROX 101^{®}), dilauroyl peroxide (e.g. LUPEROX LP^{®}), dibenzoyl peroxide (e.g., LUPEROX A98^{®}), and bis(tert-butyldioxyisopropyl)benzene (e.g., VulCUP R^{®}). Such organic peroxides are available from a variety of sources, including but not limited to Arkema (France). Preferable examples include ketone peroxides such as methyl ethyl ketone peroxide, diacyl peroxides such as benzoyl peroxide, hydroperoxides such as cumene hydroperoxide as well as peroxyketals, dialkyl peroxides, peroxydicarbonates and peroxy esters. Examples of thermal curing catalysts also include inorganic peroxides such as peroxydisulfates, including sodium persulfate (Na₂S₂O₈), potassium persulfate (K₂S₂O₈), and ammonium persulfate ((NH₄)₂S₂O₈). Examples of thermal curing catalysts further include azobisisobutyronitrile (AIBN).

It might be advantageous to have one or more photoinitiators present in the composition of the present invention. A photoinitiator is a compound that creates reactive species e.g. free radicals, cations or anions when exposed to actinic radiation, preferably UV light or visible light, more preferably UV light. Any suitable photoinitiator, including Norrish type I and Norrish type II photoinitiators and including commonly used UV photoinitiators, examples of which include but are not limited to such as acetophenones (diethoxyacetophenone for example), phosphine oxides diphenyl(2,4,6-trimethylbenzoyl)phosphine oxide, phenyl bis(2,4,6-trimethylbenzoyl) phosphine oxide (PPO), Irgacure 369, etc. (See, e.g., US Patent No. 9,453,142 to Rolland et al.,), can be present in the composition of the present invention. Preferred photoinitiators according to the invention are those, that create free radicals. Most preferred photoinitiator is bis(2,4,6-trimethylbenzoyl)-phenylphosphineoxide, which is available under the trade name OMNIRAD^{®} 819 from IGM resins (formerly known as IRGACURE^{®} 819 from BASF SE). Other photoinitiators that can be used in the composition of the present invention are available under the product names OMNIRAD^{®} TPO (diphenyl(2,4,6-trimethylbenzoyl)phosphine oxide) and OMNIRAD^{®} TPO-L (ethyl(2,4,6-trimethylbenzoyl)phenylphosphinate) from IGM resins. Particulary preferred are photoinitiators of the Norrish 1 type, such as, for example benzophenone, benzoin, α-hydroxyalkylphenone, acylphosphine oxide or derivatives thereof. Customary photoinitiators are described for example in "A Compilation of Photoinitiators Commercially available for UV today" (K. Dietliker, SITA Technology Ltd., London 2002).

It is preferred, that the amount of curing catalysts (component (d)) present in the composition of the invention is from 0 to 5 % by weight, preferably from 0.1 to 3% by weight, and more preferably 0.5 to 2.5 % by weight based on the total weight of the sum of components (a) to (e) and/or based on the total weight of the composition, preferably based on the total weight of the composition.

Component (e) of the composition according to the invention consists of one or more additive(s).

Component (e) can comprise solid particles suspended or dispersed therein as additive(s). Any suitable solid particle can be used, depending upon the end product being fabricated. The particles can be metallic, organic/polymeric, inorganic, or composites or mixtures thereof. The particles can be nonconductive, semi-conductive, or conductive (including metallic and non-metallic or polymer conductors); and the particles can be magnetic, ferromagnetic, paramagnetic, or nonmagnetic. The particles can be of any suitable shape, including spherical, elliptical, cylindrical, etc. The particles can be of any suitable size (for example, ranging from 1 nm to 200 µm average diameter). The particles can comprise an active agent or detectable compound, though these may also be provided dissolved/solubilized in the composition of the invention. For example, magnetic or paramagnetic particles or nanoparticles can be employed.

Component (e) can comprise pigments, dyes, active compounds, detectable compounds (e.g., fluorescent, phosphorescent) as additives, again depending upon the particular purpose of the product being fabricated.

It is particular preferred, that component (e) comprises non-reactive pigments or dyes that absorb light as additive(s). Suitable examples of such light absorbers include, but are not limited to: (i) titanium dioxide (e.g., included in an amount of from 0.05 or 0.1 to 1 or 5 percent by weight), (ii) carbon black (e.g., included in an amount of from 0.05 or 0.1 to 1 or 5 percent by weight), and/or an organic ultraviolet light absorber (UV blocker) such as a hydroxybenzophenone, hydroxyphenylbenzotriazole, oxanilide, benzophenone, thioxanthone, hydroxypenyltriazine, thiophene and/or benzotriazole ultraviolet light absorber (e.g., Mayzo BLS1326) (e.g., included in an amount of 0.001 or 0.005 to 1, 2 or 4 percent by weight). Examples of suitable organic ultraviolet light absorbers include, but are not limited to, those described in US Patents Nos. 3,213,058; 6,916,867; 7,157,586; and 7,695,643. A further example of a suitable organic ultraviolet light absorber is 2,5-bis(5-tert-butyl-2-benzoxazolyl)thiophene (BBOT).

If the composition comprises a component (d) containing a thermal curing catalyst it is preferred that also that component (e) is present and comprises a curing accelerator for thermal curing. Examples of such curing accelerators include organic acid metal salts such as cobalt naphthenate, and N-substituted aromatic amines such as N,N-dimethylaniline and N,N-dimethyl-para-toluidine.

If the composition comprises a component (d) containing a photoinitiator it is preferred that also component (e) is present and comprises a photosensitizer. Examples of such photosensitizers include but are not limited to amines such as n-butylamine, triethylamine, N-methyldiethanolamine, piperidine, N,N-dimethylaniline and triethylenetetramine, sulfur compounds such as S-benzyl-isothiuronium-p-toluenesulfinate, nitriles such as N,N-dimethyl-p-aminobenzonitrile, and phosphorous compounds such as sodium diethylthiophosphate.

The composition according to the invention may comprise any suitable filler as additive(s) (component (e)), depending on the properties desired in the part or object to be made. Thus, fillers may be solid or liquid, organic or inorganic, and may include but are not limited to reactive and non-reactive rubbers: siloxanes, acrylonitrile-butadiene rubbers; reactive and non-reactive thermoplastics (including but not limited to: poly(ether imides), maleimide-styrene terpolymers, polyacrylates, polysulfones and polyethersulfones, etc.) inorganic fillers such as silicates (such as talc, clays, silica, mica), glass, carbon nanotubes, graphene, cellulose nanocrystals, etc., including combinations of all of the foregoing. Suitable fillers include but are not limited to tougheners, such as core-shell rubbers. The filler is preferably selected from inorganic particles, more preferably selected from carbon black and/or silica. Most preferably silica, functionalized with methacrylate groups, is present as filler in the composition according to the invention. Suitable silica, functionalized with methacrylate groups, is for example available from Evonik Industries AG (Germany) under the trade names AEROSIL^{®} 701, AEROSIL^{®} 711, AEROSIL^{®} R 7200 and AEROSIL^{®} R 8200. It is preferred, that the amount of fillers present in the composition of the invention is from 0 to 20 % by weight, preferably from 0 to 10 % by weight, more preferably from 0 to 5 % by weight based on the total weight of the sum of components (a) to (e) and/or based on the total weight of the composition, preferably based on the total weight of the composition.

The composition according to the invention preferably comprises a polymerization inhibitor and/or antioxidant as additive(s) (component (e)). By using a polymerization inhibitor and/or an antioxidant the polymerization of the composition during its preparation and/or its storage can be prevented. Suitable polymerization inhibitors are for example 2,6-di-tert-butyl-4-methylphenol, catechol, 4-methoxyphenol, 4-tert-butyloxyphenol, 4-benzyloxyphenol, naphthol, phenothiazine, 10-10-dimethyl-9,10-dihydroacridine, bis-[2-hydroxy-5-methyl-3-cyclohexylphenyl]-methane, bis-[2-hydroxy-5-methyl-3-tert-butylphenyl]-methane, hydroquinone, pyrogallol, 3,4-dihydroxy-1-tert-butylbenzol, 4-methoxy-2(3)-tert-butylphenol (BHA), BHA also in combination with bis-[2-carboxyethyl]-sulfide (TDPA), 4-methyl-2,6-di-tert-butylphenol (BHT), bis-[4-hydroxy-2-methyl-5-tert.-butylphenyl]-sulfide, 4-butylmercaptomethyl-2,6-di-tert-butylphenol, 4-hydroxy-3,5-di-tert-butylphenylmethane sulfonic acid dioctadecyl ester, 2,5-dihydroxytoluene, 2,5-dihydroxy-1-tert-butylbenzene, 2,5-dihydroxy-1,4-di-tert.-butylbenzene, 3,4-dihydroxy-1-tert.-butylbenzene und 2,3-dimethyl-1,4-bis-[3,4-dihydroxyphenyl]-butane, 2,2'-thiobis-(4-tert-octylphenol), (2,2,6,6-tetramethylpiperidin-1-yl)oxyl (TEMPO), also TEMPO-derivates like e.g. 4-hydroxy-TEMPO. A preferred polymerization inhibitor is 2,6-di-tert-butyl-4-methylphenol (BHT), which is sold under the trade name IONOL^{®} CP, by Oxiris Chemicals S.A. The amount of polymerization inhibitor present in the composition of the invention is preferably from 0.001 to 1 % by weight, more preferably from 0.01 to 0.5 % by weight based on the total composition.

It is preferred, that the total amount of additive(s) (component (e)) present in the composition of the invention is from 0 to 20 % by weight, preferably from 0 to 10% by weight, and more preferably from 0 to 5 % by weight based on the total weight of the sum of components (a) to (e) and/or based on the total weight of the composition, preferably based on the total weight of the composition.

Component (f) of the composition according to the invention consists of one or more solvents. Examples of solvents include but are not limited to aprotic solvents, preferably acetone, tetrahydrofuran (THF), dimethylformamide (DMF), acetonitrile (MeCN) or dimethylsulfoxide (DMSO), more preferably acetone. However, it is preferred, that the composition according to the invention is essentially solvent-free. Therefore, it is preferred, that the amount of solvent(s) present in the composition of the invention is from 0 to 10 % by weight, preferably from 0 to 5 % by weight, and more preferably from 0 to 1 % by weight based on the total weight of the sum of components (a) to (e) and/or based on the total weight of the composition, preferably based on the total weight of the composition.

The composition according to the invention is preferably used to manufacture release coatings, protective films, protective coatings, or 3D printed objects by curing said composition.

It is therefore preferred, that the composition is curable, preferably curable by means of a radical reaction, wherein the radical reaction can be initiated thermally, by UV radiation and/or by electron beams. The compositions according to the invention may be crosslinked three-dimensionally by free radicals, and cure thermally with the addition of, for example, peroxides, or under the influence of high-energy radiation, such as UV or electron beams, within a very short time, to form mechanically and chemically resistant layers which, given a suitable formulation of the compositions according to the invention, have predeterminable abhesive properties and also adhesion properties. Where the radiation used is UV radiation, the crosslinking/curing takes place preferably in the presence of photoinitiators and/or photosensitizers. Preferred are photoinitiators of the Norrish 1 type, such as, for example benzophenone, benzoin, α-hydroxyalkylphenone, acylphosphine oxide or derivatives thereof. Customary photoinitiators are described for example in "A Compilation of Photoinitiators Commercially available for UV today" (K. Dietliker, SITA Technology Ltd., London 2002). Preferred compositions according to the invention comprise photoinitiators and/or photosensitizers in a proportion by mass of 0.01% to 10%, especially 0.1% to 5%, based on the mass of the total composition. The photoinitiators and/or photosensitizers are preferably soluble in the compositions according to the invention, more preferably soluble in a proportion by mass of 0.01% to 10%, especially 0.1% to 5%, based on the mass of the total composition.

The composition according to the invention may be prepared by any suitable process, e.g. by mixing component (a) with one or more of the optional components (b) to (f) in any order. The solvent(s) (component (f)) is/are mainly employed to reduce the viscosity of the composition and to facilitate the mixing of the components. Component (f) facilitates the manufacturing of the composition as well as the application of the composition. However, it is generally preferred to provide a composition, which is essentially free of solvents, i.e. essentially free of component (f). Consequently, it is preferred to (essentially) remove the solvent(s) (component (f)) from the composition after its preparation or at some point during it preparation.

Therefore, a further aspect of the invention is a method for preparing a composition according to the invention, comprising or consisting of the steps:
(i) preparing a mixture of component (a) and component (f);
(ii) preparing a mixture by adding at least one of the components (b) to (e), preferably component (b) and/or (c), to the mixture of step (i);
(iii) (essentially) removing the component (f) from the mixture of step (ii);
(iv) optionally preparing a mixture by adding at least one of the components (b) to (e) to the mixture of step (iii), if that said component(s) have not been added in step (ii).

The process steps (i) to (iv) are carried out in the given order. However, they may be interrupted by additional intermediate process steps. It is also possible to use reactive diluents (component (b)) in addition to the solvent component (g) or as an alternative to the solvent (component(g)). The preparation of said mixture(s) can be done at room temperature or elevated temperatures. The mixing can be done by using a conventional mixing device, e.g. a speedmixer.

The composition according to the invention can be used in various fields. The composition is particularly suitable for use in the production of release coatings, protective films, protective coatings as well as the manufacturing of 3D printed objects by means of stereolithography.

Therefore, a further aspect of the inventions is a release coating, a protective film or a protective coating obtainable by curing of a composition according to the invention or a 3D printed object obtainable by 3D printing of a composition according to the invention.

It is preferred to use the composition according to the invention to produce release coatings. Release coatings (often also referred to as abhesive coatings) are known from the prior art. They are used in many diverse ways for producing labels, adhesive tapes or hygiene articles. The release coating is characterized by low adhesion in contact with adhesives and consists of a radiation-cured silicone. For curing of functional silicones, typically two mechanisms are employed. In the case of cationic curing, an epoxy-functional organosiloxane is polymerized with the aid of a photoinitiator which releases an acid on irradiation. In the case of free-radical curing, a silicone (meth)acrylate is polymerized with the aid of a photoinitiator which forms radicals on irradiation.

It is also preferred to use the composition according to the invention for 3D printing. "3D printing" is often referred to as "additive manufacturing" and *vice versa.* Therefore, in the context of this invention the terms "3D printing" and "additive manufacturing" are used synonymously and refer to a process in which objects are built by adding material layer by layer. The thus obtained object is referred to as a 3D printed object in the context of the present invention. It is preferred, that the 3D printing process / additive manufacturing process is a process of creating objects from three-dimensional digital information.

Lithography-based additive manufacturing, such as stereolithography is - as well as 3D printing process in general - traditionally mainly used to produce prototypes and functional patterns ("rapid prototyping"). As a result of technical advancements, real production applications are becoming increasingly important, such as transparent braces or hearing aid shells. For the application, the mechanical and thermal properties of the printing materials are of crucial importance. However, materials currently available for additive manufacturing do not yet have the mechanical properties of conventional manufacturing materials (see for example T. Swetly, J. Stampfl, G. Kempf and R.-M. Hucke, "Capabilities of Additive Manufacturing Technologies (AMT) in the Validation of the Automobile Cockpit", RTejournal - Forum for Rapid Technology 2014 (1)).

These materials (resins) for lithography-based additive manufacturing are based on reactive components that can be exposed and thus cured. For this purpose, radical (e.g. for acrylates) or cationic (e.g. for epoxides) polymerization is frequently used. For this purpose, special photoinitiators are added to the resin, which change their state by exposure and thus trigger the polymerization of the reactive components.

Various methods such as stereolithography, digital light processing and multi-jet modelling are available for the additive manufacturing of objects from these resins. With all procedures these resins are hardened layer by layer and so a three-dimensional object is manufactured. As a rule, resins with low viscosity are required, e.g. 20-40 mPa·s (see I. Gibson, D. W. Rosen, B. Stucker et al., "Additive manufacturing technologies", vol. 238, Springer Verlag (2010)). In order to improve the mechanical properties, especially toughness and elongation at break, of products cured in this way, the crosslinking density can be reduced, or the molecular weight of the monomers increased. However, this increases the viscosity or the melting point of the uncured resins, which until recently could not be cured using additive manufacturing processes because of the latter. Moreover, the curing speed may become too low.

However, new developments make it possible to process resins with higher viscosities. For example, WO 2015/075094 A1 and WO 2016/078838 A1 reveal stereo lithography devices in which the sequentially cured layers of polymerizable material can be heated, allowing even highly viscous resins to be processed. In WO 2015/074088 A2 photopolymerizable compositions with a viscosity of at least 20 Pa·s at room temperature are revealed, which are heated to at least 30 °C during curing. For comparison: 20 Pa·s correspond approximately to the viscosity of ethylene glycol or viscous honey, while butter with a viscosity of about 30 Pa·s is hardly flowable. However, it is advantageous, if the polymerizable material does not have to be heated during the additive manufacturing process.

The compositions of the invention show a low viscosity, high fast photocuring reaction and good mechanical properties especially regarding tensile strength at break and elongation at break.

The compositions used in the present invention have the advantage, that they can be processed at room temperature below 50 °C, preferably at or below 25 °C. This is because the viscosity of the composition at the processing temperature is preferably below 20 Pa·s.

The compositions used in the present invention have the advantage, that they can be processed without the presence of solvents. Therefore, no organic volatiles are produced during the additive manufacturing process.

The compositions used in the present invention have further the advantage, that they can be produced in a simple way.

The compositions used the present invention have the advantage, that they can comprise fillers, that lead to better characteristics, especially better tensile strength at break and elongation at break.

The compositions used in the present invention have the further advantage, that they comprise polymers (reaction products) having a low T_{g} and by using of this compositions elastomers or products having one or more properties typically for elastomers, e.g. an elongation at break of preferably more than 40 %, more preferably more than 60 % and most preferably more than 100 %, are obtainable via added manufacturing.

The composition according to the invention can be used as a photopolymerisable material in an additive manufacturing process / 3D printing process, preferably based on stereolithography. The composition according to the invention can especially be applied as raw material in additive manufacturing processes as described in WO 2015/075094 A1 or WO 2016/078838 A1.

In general, the additive manufacturing process / 3D printing process is based on the following technology: a photopolymerizable material is processed layer-by-layer to generate a shaped body. In the process a newly supplied photopolymerizable material layer is in each case polymerized with the desired contour, wherein by successively for each layer defining its individual contour the desired body is formed in its three-dimensional shape which is resulting from the succession of the layers made.

The process for preparing a release coating or a 3D printed object preferably therefore comprises the following indirectly or directly successive steps:
a. applying the composition to a surface;
b. curing of the composition, preferably by irradiating with UV radiation.

In the production of a 3D printed object by means of a 3D printing process, the process steps a and b are preferably carried out repeatedly in an alternating sequence. The 3D printed objects are thus built up stepwise.

Suitable UV radiation sources for curing the compositions according to the invention are medium-pressure mercury vapour lamps, optionally doped, or low-pressure mercury vapour lamps, UV-LED lamps, or so-called excimer emitters. The UV emitters may be polychromatic or monochromatic. The emission range of the emitter is preferably situated in the absorption range of the photoinitiators and/or photosensitizers.

In the production of the release coating it is preferred that the surface is a surface of a carrier, preferably of a sheetlike carrier. The composition of the invention here may be applied one-sidedly or double-sidedly to the sheetlike carrier. The sheetlike carrier is preferably selected from the group consisting of paper, fabric, metal foils and polymeric films. The carrier may be smooth or else may have been provided with surface structures. Particularly preferred carriers are polypropylene films and polyethylene films.

The release coatings find application, for example, in adhesive tapes, labels, packaging for self-adhesive hygiene products, food packaging, self-adhesive thermal papers, or liners for bitumen roofing membranes. The release coatings have a good release effect towards the adhesive materials employed in these applications.

The release effect with respect to adhesive materials, usually adhesive tapes or labels in industrial application, is expressed by the release force, with a low release force describing a good release effect. The release force is determined in accordance with FINAT Handbook 8th Edition, The Hague/NL, 2009 under the designation FTM 10, with the modification that the storage is carried out under pressure at 40°C. The release force depends on the quality of the release coating (e.g. uniformity, thickness and/or smoothness of the coating), on the adhesive material or adhesive, and on the test conditions. For the evaluation of release coatings, therefore, the adhesives or adhesive materials and test conditions present are to be the same. The release forces are ascertained using the adhesive tape TESA^{®}7475, trademark of Tesa SE, Germany, Hamburg, in 2.5 cm width.

The release coatings of the invention preferably have release forces of at most 20 cN/2.5 cm, more preferably of at most 10 cN/2.5 cm, very preferably of at most 8 cN/2.5 cm, and the release forces are at least 0.5 cN/2.5 cm, preferably at least 1 cN/2.5 cm.

Even without further elaboration it is believed that a person skilled in the art will be able to make the widest use of the above description. The preferred embodiments and examples are therefore to be interpreted merely as a descriptive disclosure which is by no means limiting in any way whatsoever.

Even without further elaboration it is assumed that a person skilled in the art will be able to utilize the description above to the greatest possible extent. The preferred embodiments and examples are therefore to be interpreted merely as a descriptive disclosure which is by no means limiting in any way whatsoever.

All definitions, embodiments and elucidations that are applicable to one aspect of the invention are also applicable *mutatis mutandis* to the other aspects of the invention, and vice versa.

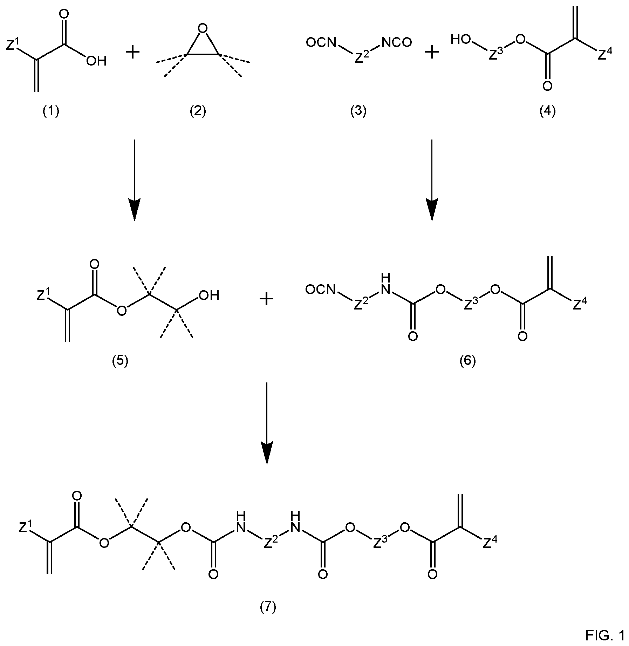

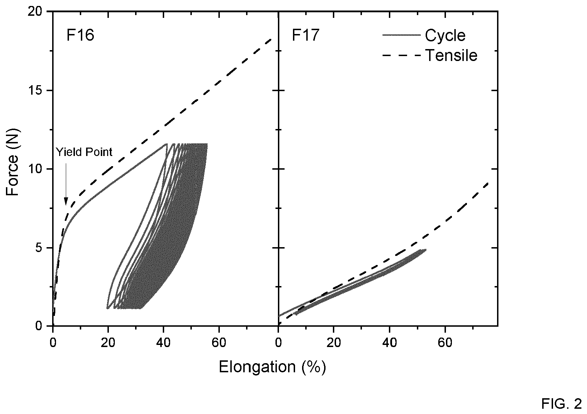

The subject-matter of the present invention is more particularly elucidated with reference to the FIG. 1 and FIG. 2, without any intention that the subject-matter of the present invention be restricted thereto.

FIG. 1 shows a reaction scheme for the synthesis of a silicone urethane (meth)acrylate according to Formula (A) (7), which is formed by reaction of a hydroxy functional silicone (meth)acrylate (5) and an isocyanate functional urethane (meth)acrylate (6), wherein the hydroxy functional silicone (meth)acrylate (5) is formed by reaction of (meth)acrylic acid (1) and an epoxy functional silicone (2), and wherein the isocyanate functional urethane (meth)acrylate (6) is formed by reaction of a diisocyanate of Formula (D) (3) and a hydroxy functional (meth)acrylate of Formula (E) (4).

FIG. 2 shows the tensile tests (dotted line) and cycle measurements (solid line) of 3D-printed test samples based on formulations F16 and F17.

The present invention is described by way of example in the examples set out below, without any possibility that the invention, the scope of application of which is apparent from the entirety of the description and the claims, can be read as being confined to the embodiments stated in the examples. Therefore, the following examples serve only to elucidate this invention for those skilled in the art and do not constitute any restriction whatsoever of the claimed subject matter.

### Examples

The following examples serve only to elucidate this invention for those skilled in the art and do not constitute any restriction whatsoever of the claimed subject matter.

### Methods

### Epoxide value:

The epoxide value was determined in accordance with DIN EN ISO 3001 (1999-11) and ASTM D 1652 (2011) in % by weight.

### Viscosity:

The viscosity was measured with a Brookfield R/S-CPS Plus rheometer using the RP75 measurement plate at 25°C. The test method is described in DIN 53019 (DIN 53019-1 (2008-09), DIN 53019-2 (2001-02) and DIN 53019-3 (2008-09)).

### Acid value:

The acid value was determined in accordance with DIN EN ISO 2114 (2002-06) by titrimetric means in mg KOH/g of polymer.

### Hydroxyl value (OH value):

The OH number was determined in accordance with DIN EN ISO 4629-2 (2016-12) . by titrimetric means in mg KOH/g of polymer.

### Isocyanate value (NCO value):

The NCO value was determined in accordance with DIN EN 1242 (2013-05) by titrimetric means in % by weight.

### Gel permeation chromatography (GPC):

GPC measurements for the weight-average molecular weight Mw and the number-average molecular weight Mₙ are conducted under the following measurement conditions: Column combination SDV 1000/10 000 Å (length 55 cm), temperature 35°C, THF as mobile phase, flow rate 0.35 ml/min, sample concentration 10 g/l, RI detector, evaluation of the polymers against polystyrene standard (162-2 520 000 g/mol).

### Materials

### VESTANAT^{®} AT EP-DC 1241:

VESTANAT^{®} AT EP-DC 1241 (Evonik Industries AG) is a commercially available adduct of 2-hydroxyethyl-propenoate (2-hydroxyethyl acrylate, HEA) with 5-isocyanato-(isocyanatomethyl)-1,3,3-trimethylcyclohexane (isophorone diisocyanate, IPDI), comprising the following isomers:

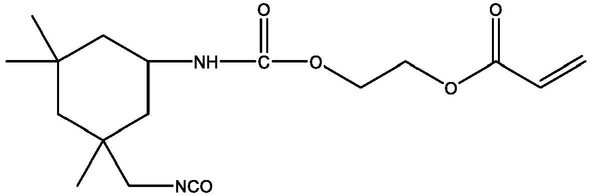

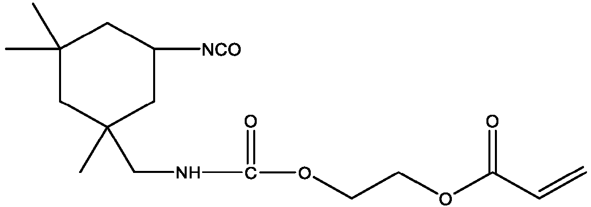

### Component (a) - silicone urethane (meth)acrylates according to Formula (F)

### Synthesis

S1) preparation of a silicone urethane acrylate according to Formula (F) where m1=0, m2=2, m3=0, d1=28, d2=t=q=0, x1=3, (x2=1 and x3=0) or (x2=1 and x3=0), R=CH₃, R¹=H, R²=Formula (H), R³=Formula (I), R⁴=H and R⁵=Formula (J)

A 2 L four-necked flask fitted with mechanical stirrer, reflux condenser and internal thermometer is charged with 94.4 g of acrylic acid, 0.3 g of methylhydroquinone, 69.5 g of n-butanol, 41.7 g of methyl isobutyl ketone and 3 g of a 50% aqueous solution of chromium(III) acetate while stirring. To this is added, while heating to 115°C, 1291 g of a polydimethylsiloxane modified with terminal epoxy groups and having an epoxide oxygen value of 1.32% by weight. Stirring at 115-120°C is continued until the conversion of the epoxy groups, as determined by means of the acid value, is > 99%. All volatiles are then distilled off at 120°C and full vacuum. Filtration affords a liquid silicone acrylate having a viscosity at 25°C of < 200 mPa·s and a hydroxyl value of 52 mg KOH/g.

In a 2 L four-necked flask fitted with mechanical stirrer, reflux condenser and internal thermometer, 1078.8 g of the silicone acrylate thus prepared is mixed with 356.2 g of VESTANAT^{®} EP-DC 1241 and 2.87 g of TIB KAT 716 LA and stirred at 60°C for 6 hours. The highly viscous silicone urethane acrylate has a residual NCO content of < 0.03% and a GPC-determined number-average molecular weight Mₙ of 4395 g/mol and weight-average molecular weight Mw of 6513 g/mol.

S2) preparation of a silicone urethane acrylate according to Formula (F) where m1=0, m2=1, m3=1, d1=28, d2=t=q=0, x1=3, (x2=1 and x3=0) or (x2=1 and x3=0), R=CH₃, R¹=H, R²=Formula (H), R³=Formula (I), R⁴=H, R⁵=Formula (J), and R^{A} = Formula (K) or (L)

In a 2 L four-necked flask fitted with mechanical stirrer, reflux condenser and internal thermometer, 253 g of a silicone acrylate prepared according to Example S1 and having a hydroxyl value of 51 mg KOH/g is mixed with 40.96 g of VESTANAT^{®} EP-DC 1241 and 0.59 g of TIB KAT 716 LA and stirred at 60°C for 6 hours. The resulting silicone urethane acrylate has a viscosity at 25°C of 1837 mPa·s and a GPC-determined number-average molecular weight Mₙ of 2872 g/mol and weight-average molecular weight Mw of 5377 g/mol.

S3) preparation of a silicone urethane acrylate according to Formula (F) where m1=0, m2=2, m3=0, d1=48, d2=d3=t=q=0, x1=3, (x2=1 and x3=0) or (x2=1 and x3=0), R=CH₃, R¹=H, R²=Formula (H), R³=Formula (I), R⁴=H and R⁵=Formula (J)
A 2 L four-necked flask fitted with mechanical stirrer, reflux condenser and internal thermometer is charged with 131.69 g of acrylic acid, 0.6 g of methylhydroquinone, 86.9 g of n-butanol, 3.6 g of 2-(((3-(octyloxy)propyl)imino)methyl)phenol prepared according to EP 3168273 A1 and 1.7 g of a 50% aqueous solution of chromium(III) acetate while stirring. To this is added, while heating to 115°C, 2763.5 g of a polydimethylsiloxane modified with terminal epoxy groups and having an epoxide oxygen value of 0.92% by weight. Stirring at 115-120°C is continued until the conversion of the epoxy groups, as determined by means of the acid value, is > 99%. All volatiles are then distilled off at 120°C and 3 mbar vacuum with a small air bleed. Filtration affords a liquid silicone acrylate having a hydroxyl value of 30 mg KOH/g.

In a 2 L four-necked flask fitted with mechanical stirrer, reflux condenser and internal thermometer, 3140.8 g of the silicone acrylate thus prepared is mixed with 1123.5 g of acetone, 604.2 g of VESTANAT^{®} EP-DC 1241 and 7.5 g of TIB KAT 716 LA and stirred at 60°C for 6 hours. Distillation at 60°C and 3 mbar with a small air bleed affords a green-brown, clear product with a viscosity at 25°C of 18216 mPa·s.

S4) preparation of a silicone urethane acrylate according to Formula (F) where m1=0, m2=2, m3=0, d1=8, d2=d3=t=q=0, x1=3, x3=1, R=CH₃, R¹=C₂H₅, R²=R³=Formula (I), R⁴=H, R⁵=Formula (J)

A 5 L four-necked flask fitted with mechanical stirrer, reflux condenser and internal thermometer is charged with 47.7 g of a hydroxy-functional siloxane having a hydroxyl value of 200 mg KOH/g, prepared according to Example 1 of EP 0940422 B, and 57.7 g of Vestanat^{®} EP-DC 1241 and the mixture is heated to 80°C while stirring. To this is added 0.21 g of TIB^{®} KAT 716 LA and the mixture is stirred at 80°C for 5 hours. The viscosity increases sharply during this time. This affords a clear, yellow polymer that is highly viscous at 80°C and at room temperature solidifies to a glassy mass.

S5) preparation of a silicone urethane acrylate according to Formula (F) where m1=0, m2=2, m3=0, d1=78, d2=d3=t=q=0, x1=3, x3=1, R=CH₃, R¹=C₂H₅, R²=R³=Formula (I), R⁴=H, R⁵=Formula (J)

In a 5 L four-necked flask fitted with mechanical stirrer, reflux condenser and internal thermometer, 1055.21 g of a hydroxy-functional siloxane having a hydroxyl value of 42 mg KOH/g, prepared according to the prior art disclosed in EP 0940422 B1, and 281.41 g of Vestanat^{®} EP-DC 1241 are dissolved in 2004.94 g of toluene and 2.67 g of TIB^{®} KAT 716 LA is added.

The reaction mixture is heated to 60°C and stirred for 4 h. After distilling off the toluene at 70°C and on reaching a target pressure of 20 mbar after 2 h, a polymer is obtained that is very highly viscous at 70°C and at room temperature solidifies to a glassy mass. The GPC-determined number-average molecular weight Mₙ is 8638 g/mol and the weight-average molecular weight Mw is 28 731 g/mol.

S6) preparation of a silicone urethane acrylate according to Formula (F) where m1=0, m2=2, m3=0, d1=48, d2=d3=t=q=0, x1=3, x3=0, R=CH₃, R¹= R²=H, R³=Formula (I), R⁴=H, R⁵=Formula (J)
A 0.5 L four-necked flask fitted with mechanical stirrer, reflux condenser and internal thermometer is charged with 179.0 g of a polydimethylsiloxane modified with terminal hydroxy groups and having a hydroxyl value of 47 mg KOH/g, and 53.3 g of Vestanat^{®} EP DC 1241 and 116.1 g of toluene are added while stirring. To this is added 0.23 g of TIB^{®} KAT 716 LA. The reaction mixture is heated to 60°C and stirred at 60°C for 4 hours. The solvent is then distilled off on a rotary evaporator at 80°C and 2 mbar over a period of one hour. A very highly viscous polymer that solidifies at toom temperature is obtained.

S7) preparation of a silicone urethane acrylate according to Formula (F) where m1=1, m2=1, m3=0, d1=28, d2=d3=t=q=0, x1=3, (x2=1 and x3=0) or (x2=1 and x3=0), R=CH₃, R¹=H, R²=Formula (H), R³=Formula (I), R⁴=H and R⁵=Formula (J)

A 0.5 L four-necked flask fitted with mechanical stirrer, reflux condenser and internal thermometer is charged with 12.4 g of acrylic acid, 0.032 g of methylhydroquinone, 9.5 g of n-butanol, 0.38 g of 2-(((3-(octyloxy)propyl)imino)methyl)phenol prepared according to EP 3168273 A1 and 0.19 g of a 50% aqueous solution of chromium(III) acetate while stirring. To this is added, while heating to 120°C, 303.7 g of a linear polydimethylsiloxane modified with one terminal epoxy group and one terminal trimethylsiloxy group and having an epoxide oxygen value of 0.79% by weight. Stirring at 115-120°C is continued until the conversion of the epoxy groups, as determined by means of the acid value, is > 99%. All volatiles are then distilled off at 120°C and 3 mbar vacuum with a small air bleed. Filtration affords a liquid silicone acrylate having a hydroxyl value of 27 mg KOH/g.

In a 0.5 L four-necked flask fitted with mechanical stirrer, reflux condenser and internal thermometer, 200.6 g of the silicone acrylate thus prepared is mixed with 70.3 g of acetone, 33.8 g of VESTANAT^{®} EP-DC 1241 and 0.23 g of TIB KAT 716 LA and stirred at 60°C for 4 hours. Distillation at 60°C and 1-2 mbar with a small air bleed affords a greenish, clear product with a viscosity at 25°C of 857 mPa·s.

S8) preparation of a silicone urethane acrylate according to Formula (F) where m1=2, m2=0, m3=0, d1=65, d2=4, d3=t=q=0, x1=3, (x2=1 and x3=0) or (x2=1 and x3=0), R=CH₃, R¹=H, R²=Formula (H), R³=Formula (I), R⁴=H and R⁵=Formula (J)

A 2 L four-necked flask fitted with mechanical stirrer, reflux condenser and internal thermometer is charged with 37.29 g of acrylic acid, 0.073 g of methylhydroquinone, 21.13 g of n-butanol, 0.887 g of 2-(((3-(octyloxy)propyl)imino)methyl)phenol prepared according to EP 3168273 A1 and 0.422 g of a 50% aqueous solution of chromium(III) acetate while stirring. To this is added, while heating to 115°C, 666.64 g of a statistically distributed [Poly-dimethyl(methyl-, glycidoxypropyl)]-siloxane-Copolymer having an epoxide oxygen value of 1.08% by weight and a viscosity of 145 mPa·s at 25°C. Stirring at 115-120°C is continued until the conversion of the epoxy groups, as determined by means of the acid value, is > 99%. All volatiles are then distilled off at 120°C and 3 mbar vacuum with a small air bleed. Filtration affords a liquid silicone acrylate having a hydroxyl value of 33.8 mg KOH/g.

In a 1 L four-necked flask fitted with mechanical stirrer, reflux condenser and internal thermometer, 215,8 g of the silicone acrylate thus prepared is mixed with 77,9 g of acetone, 43,9 g of VESTANAT^{®} EP-DC 1241 and 0,25 g of TIB KAT 716 LA and stirred at 60°C for 4 hours. Distillation at 60°C and 3 mbar with a small air bleed affords a brown, clear product with a viscosity at 25°C of 20004 mPa·s.

S9) preparation of a silicone urethane acrylate according to Formula (F) where m1=2, m2=0, m3=0, d1=65, d2=2, d3=2, t=q=0, x1=3, (x2=1 and x3=0) or (x2=1 and x3=0), R=CH₃, R¹=H, R²=Formula (H), R³=Formula (I), R⁴=H, R⁵=Formula (J), and R^{A} = Formula (K) or (L)

In a 1 L four-necked flask fitted with mechanical stirrer, reflux condenser and internal thermometer, 183,6 g of the silicone acrylate prepared in example S8 is mixed with 60.7 g of acetone, 18,7 g of VESTANAT^{®} EP-DC 1241 and 0,20 g of TIB KAT 716 LA and stirred at 60°C for 4 hours. Distillation at 60°C and 3 mbar with a small air bleed affords a brown, clear product with a viscosity at 25°C of 2146 mPa·s.

The silicone urethane (meth)acrylates are listed in Table 1. The silicone urethane (meth)acrylates according to the invention have a lower viscosity than the silicone urethane (meth)acrylates which are not according to the invention.

**Table 1: Silicone urethane (meth)acrylates according to Formula (F) - component (a)**

| Ex. | m1 | m2 | m3 | d1 | d2 | d 3 | t | q | x1 | x2 | x3 | R | R¹ | R² | R³ | R⁴ | R⁵ | R^{A} |
|---|---|---|---|---|---|---|---|---|---|---|---|---|---|---|---|---|---|---|
| S1^{[1]} | 0 | 2 | 0 | 28 | 0 | 0 | 0 | 0 | 3 | 1/0 ^{[3]} | 0/1 ^{[3]} | CH₃ | H | Formula (H) | Formula (I) | H | Formula (J) | - |
| S2^{[1]} | 0 | 1 | 1 | 28 | 0 | 0 | 0 | 0 | 3 | 1/0 ^{[3]} | 0/1 ^{[3]} | CH₃ | H | Formula (H) | Formula (I) | H | Formula (J) | Formulae (K) / (L) |
| S3^{[1]} | 0 | 2 | 0 | 48 | 0 | 0 | 0 | 0 | 3 | 1/0 ^{[3]} | 0/1 ^{[3]} | CH₃ | H | Formula (H) | Formula (I) | H | Formula (J) | - |
| S4 ^{[2]} | 0 | 2 | 0 | 8 | 0 | 0 | 0 | 0 | 3 | - | 1 | CH₃ | C₂H₅ | Formula (I) | Formula (I) | H | Formula (J) | - |
| S5 ^{[2]} | 0 | 2 | 0 | 78 | 0 | 0 | 0 | 0 | 3 | - | 1 | CH₃ | C₂H₅ | Formula (I) | Formula (I) | H | Formula (J) | - |
| S6 ^{[2]} | 0 | 2 | 0 | 48 | 0 | 0 | 0 | 0 | 3 | - | 0 | CH₃ | H | H | Formula (I) | H | Formula (J) | - |
| S7^{[1]} | 1 | 1 | 0 | 28 | 0 | 0 | 0 | 0 | 3 | 1/0 ^{[3]} | 0/1 ^{[3]} | CH₃ | H | Formula (H) | Formula (I) | H | Formula (J) | - |
| S8 ^{[1]} | 2 | 0 | 0 | 65 | 4 | 0 | 0 | 0 | 3 | 1/0 ^{[3]} | 0/1 ^{[3]} | CH₃ | H | Formula (H) | Formula (I) | H | Formula (J) | - |
| S9^{[1]} | 2 | 0 | 0 | 65 | 2 | 2 | 0 | 0 | 3 | 1/0 ^{[3]} | 0/1 ^{[3]} | CH₃ | H | Formula (H) | Formula (I) | H | Formula (J) | Formulae (K) / (L) |

| | | | | | | | | | | | | | | | | | | |
|---|---|---|---|---|---|---|---|---|---|---|---|---|---|---|---|---|---|---|
| [1] according to the invention [2] not according to the invention [3] x2+x3=1 | | | | | | | | | | | | | | | | | | |

**Table 1 (cont.): Silicone urethane (meth)acrylates according to Formula (F) - component (a)**

| Ex. | Viscosity, 25°C (mPa·s) | Number of Acrylate Groups | Number of Urethane Groups |
|---|---|---|---|
| S1^{[1]} | ~ 80.000 | 4 | 4 |
| S2^{[1]} | 1.837 | 3 | 2 |
| S3^{[1]} | 18.216 | 4 | 4 |
| S4^{[2]} | solid | 4 | 8 |
| S5^{[2]} | solid | 4 | 8 |
| S6 ^{[2]} | solid | 2 | 4 |
| S7^{[1]} | 1350 | 2 | 2 |
| S8^{[1]} | 20.004 | 8 | 8 |
| S9^{[1]} | 2146 | 6 | 4 |

| | | | |
|---|---|---|---|
| [1] according to the invention [2] not according to the invention [3] x2+x3=1 | | | |

### Component (b) - organic (meth)acrylates (reactive diluents)

The organic (meth)acrylates which have been used as component (b) are listed in Table 2

**Table 2: Organic (meth)acrylates - component (b)**

| Reactive diluents | Manufacturer |
|---|---|
| Visiomer^{®} IBOA | Evonik Industries AG |
| Visiomer^{®} Terra IBOMA | Evonik Industries AG |
| Lauryl acrylate | BASF AG |
| Ebecryl^{®} 45 | Allnex SA |
| Hexanediol diacrylate | Allnex SA |
| Trimethylolpropane triacrylate | Allnex SA |

### Component (c) - silicone (meth)acrylates without urethane groups

### Component (c1): Silicone (meth)acrylates according to Formula (Q)

The silicone (meth)acrylates S10, S12 and S13 according to Formula (Q) are prepared according to methods of the prior art, as described for example in EP 0940422 A1. The silicone (meth)acrylates according to Formula (Q) are listed in Table 3.

**Table 3: Silicone (meth)acrylates according to Formula (Q) - component (c1)**

| Ex. | m1 | d1 | x1 | x4 | R | R⁴ | R^{A} | R⁶ | R⁷ |
|---|---|---|---|---|---|---|---|---|---|
| S10 | 2 | 158 | 3 | 0 | CH₃ | CH₃ | Formula (Q) | C₂H₅ | Formula (H) |
| S11 | 2 | 158 | 3 | 0 | CH₃ | H | Formula (Q) | C₂H₅ | Formula (H) |
| S12 | 2 | 398 | 3 | 0 | CH₃ | CH₃ | Formula (Q) | C₂H₅ | Formula (H) |
| S13 | 2 | 298 | 3 | 0 | CH₃ | H | Formula (Q) | C₂H₅ | Formula (H) |

### Component (c2): Silicone (meth)acrylates according to Formula (S)

The silicone (meth)acrylates according to Formula (S) are prepared according to methods of the prior art, as disclosed for example in EP 3168273 A1 or WO 2017187030 A1. The silicone (meth)acrylates according to Formula (S) are listed in Table 4.

**Table 4: Silicone (meth)acrylates according to Formula (S) - component (c2)**

| Ex. | m1 | d1 | d2 | d3 | x1 | R | R^{A} | R⁴ | R^{AC} | R⁵ |
|---|---|---|---|---|---|---|---|---|---|---|
| S14 | 2 | 13 | 4 | 1 | 3 | CH₃ | Formulae (K) and/or (L) | H | Formulae (T) and/or (U) | CH₃ 5 |
| S15 | 2 | 90 | 6 | 1 | 3 | CH₃ | Formulae (K) and/or (L) | H | Formulae (T) and/or (U) | CH₃ |

### Preparation of mixtures with organic acrylates

Provided the viscosity permits this, the silicone urethane (meth)acrylate obtained is mixed with organic acrylates as reactive diluents while heating and stirring. In the case of low-boiling or heat-sensitive reactive diluents, a diluent exchange is carried out immediately after synthesis. This is done by adding the amount of an organic (meth)acrylate (reactive diluent) required for the desired mixture in the individual case and distilling off the acetone at room temperature under full vacuum. The mixtures according to the invention are shown in Table 5.

**Table 5: Mixture examples**

| Silicone | Content wt% | Reactive diluent | Content wt% | Preparation * | Viscosity, 25°C, mPa·s |
|---|---|---|---|---|---|
| S1 | 90% | Visiomer^{®} IBOA | 10% | Mixing | 9182 |
| S1 | 90% | Lauryl acrylate | 10% | Mixing | 31370 |
| S1 | 90% | Ebecryl^{®} 45 | 10% | Mixing | 5940 |
| S1 | 90% | Hexanediol diacrylate | 10% | Mixing | 19670 |
| S1 | 80% | Visiomer^{®} IBOA | 20% | diluent exchange | 2740 |
| S3 | 80% | Lauryl acrylate | 20% | diluent exchange | 896 |
| S3 | 80% | Hexanediol diacrylate | 20% | diluent exchange | 624 |
| S3 | 80% | Ebecryl^{®} 45 | 20% | diluent exchange | 2788 |
| S3 | 80% | Trimethylolpropane triacrylate | 20% | diluent exchange | 4079 |

### Curing Trials

The UV-curable silicones or their blends were mixed with 2 wt% Photoinitiator TEGO^{®} A18. 30 g of this mixture were placed in an aluminium lid of 5 cm diameter to yield layers of a few millimetres thickness. The lids were placed under a mercury-UV lamp of 80 W/cm from Eltosch. Curing generally occurred within a few seconds. The specimens were allowed to stand at room temperature for a day, before they were visually inspected and tested for rub-off and stickiness of the surface. If the mechanical stability of the specimen allowed, it was taken out of the lid and subjected to manual bending and tearing. The mixtures used for the curing trials are shown in Table 6.

**Table 6: Mixture for curing trials**

| | Amount | Diluent | Amount | PI ^{[3]} | Amount | Appearance | Surface | Rub-Off | Tear Test |
|---|---|---|---|---|---|---|---|---|---|
| S1 [1] | 14.7 g | IBOA | 14.7 g | A18 | 0.6 g | clear | smooth | none | bendable |
| S1 [1] | 26.5 g | IBOA | 2.9 g | A18 | 0.6 g | hazy | smooth | none | bendable |
| S11 [2] | 14.7 g | IBOA | 14.7 g | A18 | 0.6 g | clear | wrinkled | none | sticks to lid ^{[4]} |
| S11 [2] | 26.5 g | IBOA | 2.9 g | A18 | 0.6 g | clear | soft, sticky | yes | breaks |

| | | | | | | | | | |
|---|---|---|---|---|---|---|---|---|---|
| [1] according to the invention [2] not according to the invention [3] PI = photoinitiator [4] Specimen cannot be taken out of the lid, since it sticks to the aluminium surface and breaks when taken out. Adhesion is stronger than cohesion, mechanical integrity of specimen is poor. | | | | | | | | | |

It is evident from the results of the curing trials that the cured compositions, which are based on the silicone urethane (meth)acrylates according to the invention, have superior properties compared to those compositions, which are based on silicone (meth)acrylates without urethane groups. The cured compositions according to the invention show a smooth surface and are bendable, whereas the non-inventive compositions have either a soft and sticky surface or a wrinkled surface. Moreover, the non-inventive compositions fail in the tear test.

### Casting trials

Mechanical properties of silicones were evaluated by measuring cured formulations prepared by casting. The crosslinking occurs by adding a 1 wt% of a photoinitiator (TPO-L) as a and irradiating the composition with a UV Lamp or projector. The components of the formulation were weighed in a balance with a precision of ±0.001 g and homogenized in a *SpeedMixer* for 10 min at 2300 rpm. The amount was set according to the required volume. During mixing, the entire set-up is heated to 40°C. The formulations are named FX (X= trial number).

Viscosity (*η*) measurements of the uncured samples were performed in a rheometer *Malvern Kinexus Lab+* using a cone-plate geometry (4°) after equilibration at room temperature (RT). The reported value is obtained using a frequency of 10 Hz.

Casted samples were prepared after exposing the formulation to UV radiation (2400 mW/cm²) with a wavelength of 405 nm. The exposure time was 5 min. After, the objects were washed in isopropanol for 10 minutes and placed in a cure station at 80°C for 2 h (Light Intensity 18mW/cm² and wavelength 405 nm).

Mechanical properties of the cured samples were evaluated in universal testing machine following DIN EN ISO 527 5A. "DIN EN ISO 527 5A" as used herein refers to the testing conditions of DIN EN ISO 527 as described in part 1 of said norm, wherein a specimen with the size and shape corresponding to "5A" as described in part 2 of said norm is tested). The parameters of interest are Young's Modulus (E), tensile strength at break (*σ*_{b}) and elongation at break (*ε*_{b}).

Table 7 shows the components, contents (%) and mechanical properties of the evaluated formulations.

**Table 7: Formulations with 1 wt% photoinitiator (TPO-L), mechanical properties of casted samples**

| Formulation | Silicone Components | | Content (wt%) | | | *η* [mPa·s] | Mechanical Properties | | | Class [3] |
|---|---|---|---|---|---|---|---|---|---|---|
| | Silicone Urethane Acrylate | Silicone acrylate | Reactive Diluent (IBOMA) | Silicone Urethane Acrylate | Silicone acrylate | | *σ*_{b} [MPa] | *ε*_{b} [%] | *E* [MPa] | |
| F1 ^{[1]} | S1 | - | - | 99 | - | 68000 | 2.72 | 2.82 | 117.0 | R |
| F2 ^{[2]} | - | S13 | - | - | 99 | 4400 | - | - | - | S |
| F3 ^{[2]} | - | S12 | - | - | 99 | 7500 | - | - | - | S |
| F4 ^{[1]} | S1 | - | 10 | - | 89 | 42500 | - | - | - | RR |
| F5 ^{[1]} | S1 | - | 29 | - | 70 | 24350 | - | - | - | RR |
| F6 ^{[2]} | - | S13 | 10 | - | 89 | 2340 | 0.6 | 70.7 | 0.20 | F |
| F7 ^{[2]} | - | S13 | 29 | - | 70 | 1100 | 1.07 | 125.9 | 0.34 | F |
| F8 ^{[2]} | - | S12 | 10 | - | 89 | 3480 | 1.54 | 210.2 | 0.52 | F |
| F9 ^{[2]} | - | S12 | 29 | - | 70 | 1810 | 3.59 | 271.2 | 1.06 | F |
| F10 ^{[1]} | S1 | S13 | 10 | 10 | 79 | 2880 | 1.22 | 132.0 | 0.62 | E |
| F11 ^{[1]} | S1 | S13 | 10 | 17 | 72 | 3150 | 1.29 | 92.9 | 1.07 | E |
| F12^{[1]} | S1 | S12 | 10 | 10 | 79 | 4950 | 0.40 | 148.8 | 0.20 | E |
| F13^{[1]} | S1 | S12 | 10 | 17 | 72 | 5200 | 1.31 | 140.6 | 0.83 | E |
| F14 ^{[1]} | S7 | S13 | 10 | 10 | 79 | 2400 | 0.07 | 41 | 0.14 | E |
| F15 ^{[1]} | S7 | S13 | 10 | 17 | 72 | 2300 | 0.76 | 110 | 0.22 | E |

| | | | | | | | | | | |
|---|---|---|---|---|---|---|---|---|---|---|
| [1] according to the invention [2] not according to the invention [3] Class: RR: Very rigid and very low elongation capability. The material is not mouldable, and it is not possible to perform tensile testing. R: Rigid material with high tensile strength and medium elongation capability. The material can be moulded into a specimen for tensile testing. S: Soft material with very low Young's modulus. The material resembles a glue or a paste, and it is not possible to obtain a specimen for tensile testing. F: Flexible material which can be deformed and bended with permanent plastic deformation. The original geometry cannot be recovered. E: Elastomer material with high elasticity capable of recovering its original geometry. | | | | | | | | | | |

As can be seen in Table 7 it is possible to obtain elastomeric materials which are very elastic and capable of recovering its original geometry after deformation by a combination of silicone urethane (meth)acrylates according to the invention and silicone (meth)acrylates without urethane groups. It is also evident that it is easy to adapt the viscosity and the mechanical properties as needed simply by adjusting the amounts of silicone urethane (meth)acrylates according to the invention, silicone (meth)acrylates without urethane groups and organic (meth)acrylate. Furthermore, it is evident from the comparison of F12 and F14 as well as F13 and F15, that compositions based on silicone urethane acrylate S1 (with four acrylate groups and four urethane groups) will yield elastomeric materials which have better mechanical properties compared to similar compositions based on the silicone urethane acrylate S7 (with two acrylate groups and two urethane groups).

### Additive Manufacturing using stereolithography (SLA) and digital light processing (DLP)

SLA or DLP printers with 365-405 nm wavelengths projectors can in general be used to print the formulations. In the following examples a DLP printer *(Station 5, Atum3D)* equipped with a light projector with a light intensity of 15 mW/cm² and wavelength of 405 nm was used to process the formulations. The viscosity of the formulations should preferably not exceed 30000 mPa·s, to assure fluency of the material while the building platform is moving. Table 8 shows an example of the most important parameters for a print-job.

**Table 8: Printing Parameters**

| Parameter | Value |
|---|---|
| Number of Initial Layers | 1 |
| Thickness of Initial Layers (µm) | 200 |
| Curing Time of Initial Layers (s) | 30 |
| Thickness of Layers (µm) | 100 |
| Curing Time of Layers (s) | 25 |
| Approach Speed (mm/min) | 50 |
| Holding time after approach (s) | 10 |
| Retraction Speed (mm/min) | 50 |
| Retraction height (mm) | 10 |
| Holding time after retraction (s) | 0 |

Table 9 shows the formulations of specimens according to the norm DIN EN ISO 527 5A. The photo-package is adapted to the printer's wavelength and light intensity (photoinitiator: 1-2 wt%, UV blocker: 0.01-0.05 wt%). After printing, all the objects were washed in isopropanol for 10 minutes and placed in a cure station at 80°C for 2 h (light intensity: 18mW/cm² and wavelength: 405 nm).

**Table 9: Formulations with 1 wt% photoinitiator (TPO-L) and 0.01 wt% UV blocker (BBOT), mechanical properties of 3D-printed samples**

| Formulation | Silicone Components | | Content (wt%) | | | Mechanical Properties | | | Class ^{[3]} |
|---|---|---|---|---|---|---|---|---|---|
| | Silicone urethane acrylate | Silicone acrylate | Monomer (IBOMA)) | Silicone urethane acrylate | Silicone acrylate | *σ*_{b} [MPa] | *ε*_{b} [%] | *E* [MPa] | |
| F5 ^{[1]} | S1 | - | 29 | 70 | - | 18.1 | 10 | 783 | R |
| F7 ^{[2]} | - | S13 | 29 | - | 70 | 3.18 | 69.9 | 53.4 | F |
| F9 ^{[2]} | - | S12 | 29 | - | 70 | 1.98 | 124.8 | 35.7 | F |
| F10 ^{[1]} | S1 | S13 | 10 | 10 | 79 | 1.07 | 113.8 | 0.39 | E |
| F11 ^{[1]} | S1 | S13 | 10 | 17 | 72 | 0.61 | 73.7 | 0.59 | E |
| F12^{[1]} | S1 | S12 | 10 | 10 | 79 | 1.08 | 148.9 | 0.38 | E |
| F13^{[1]} | S1 | S12 | 10 | 17 | 72 | 1.69 | 109.6 | 0.63 | E |
| F14 ^{[1]} | S7 | S13 | 10 | 10 | 79 | 0.63 | 77.4 | 0.25 | E |
| F15 ^{[1]} | S7 | S13 | 10 | 17 | 72 | 1.00 | 80.0 | 0.22 | E |

| | | | | | | | | | |
|---|---|---|---|---|---|---|---|---|---|
| [1] according to the invention [2] not according to the invention [3] Class: R: Rigid material with high tensile strength and medium elongation capability. The material could be printed by DLP to obtain a specimen for tensile testing. F: Flexible material which can be deformed and bended with permanent plastic deformation. The original geometry cannot be recovered. E: Elastomer material with high elasticity capable of recovering its original geometry. | | | | | | | | | |

As can be seen in Table 9 it is possible to obtain elastomeric materials which are very elastic and capable of recovering its original geometry after deformation by DLP of formulations containing silicone urethane (meth)acrylates and silicone (meth)acrylates without urethane groups. F10, F11, F12 and F13 showed that the addition of silicone urethane acrylate (L) to silicone acrylate (S13 or S12) converts the material into an elastomer (E). From a rigid formulation (F1) or flexible formulations (F6, F7, F8 and F9) to a rubber-like material, capable of recover their initial geometry. F10 vs. F11 showed that increasing the content of S1, will increase the tensile strength and Young's modulus. The results are similar for F12 vs. F13. The addition of an organic (meth)acrylate (IBOMA) improves the printability. Additionally, the monomer has a high glass transition temperature (T_{g}) that allowed to increase tensile strength and Young modulus of the Soft (S) samples. Furthermore, it is evident from the comparison of F12 and F14 as well as F13 and F15, that compositions based on silicone urethane acrylate S1 (with four acrylate groups and four urethane groups) will yield elastomeric materials which have better mechanical properties compared to similar compositions based on the silicone urethane acrylate S7 (with two acrylate groups and two urethane groups).

### Cycle Measurements of Printed Silicone Formulations

To demonstrate the suitability of the Silicon Urethane Acrylate (S1) for producing elastomeric (E) materials, cycle measurements to determine the recovery percentage of the material after elongation were carried out. Table 10 shows the formulation content, viscosity, and mechanical properties of the samples. The samples were printed following the procedure described above in section *Additive Manufacturing using stereolithography (SLA) and digital light processing (DLP).*

The tensile tests followed the norm DIN EN ISO 527 5A. For comparison purposes, the same testing conditions were maintained in the cycle measurements. In each cycle, the sample is deformed to half its elongation at break (*ε_{b}*) in Table 10. The procedure was as follows:
- For F16, a maximum force of 11.6 N is applied first. Afterwards, the force is reduced to 1.1 N,
- For F17, a maximum force of 5 N is applied first. Afterwards, the force is reduced to 0.7 N.

The cycle was repeated 10 times. None of the specimens were broken during the cycle measurement. The recovery in each cycle is calculated by: $Recovery \left(%\right) = \frac{{ε}_{max} - {ε}_{min}}{{ε}_{max}} \times 100$ wherein εₘₐₓ refers to the maximum elongation and εₘᵢₙ to the minimum elongation observed during each cycle.

The results of the cycle measurements are shown in Table 11 and Figure 2. For F16 the recovery is 52% in the first cycle and 44% in the tenth cycle. This behaviour indicates a plastic and unrecoverable deformation typical for a flexible material (F). Obviously, the yielding point has been passed in the mechanical curve (left plot) and with each cycle there is a displacement to lower recovery values indicating further plastic deformation. In contrast, for F17 the recovery is 89% in the first cycle and 87% in the tenth cycle with almost no displacement. Elastomeric materials (E) typically show no yielding point. This illustrates that a flexible material (F) can be converted to an elastomeric material (E) by addition of S1 to the formulation.

**Table 10: Formulations with 1 wt% photoinitiator (TPO-L) and 0.01 wt% UV blocker (BBOT), mechanical properties of 3D-printed samples**

| Formulation | Silicone Components | | Content (wt%) | | | *η* [mPa·s] | Mechanical Properties | | | Class ^{[3]} |
|---|---|---|---|---|---|---|---|---|---|---|
| | Silicone urethane acrylate | Silicone acrylate | Reactive Diluent (IBOMA) | Silicone urethane acrylate | Silicone acrylate | | *σ*_{b} [MPa] | *ε*_{b} [%] | *E* [MPa] | |
| F16 ^{[2]} | - | S10 | 29 | - | 70 | 336 | 3.46 | 140.1 | 5.4 | F |
| F17 ^{[1]} | S1 | S10 | 10 | 17 | 72 | 903 | 1.26 | 71.2 | 1.5 | E |

**Table 11. Recovery in cycle measurements for flexible and elastomeric silicone materials.**

| Formulation | Class ^{[3]} | Recovery (%) | | | | | | | | | |
|---|---|---|---|---|---|---|---|---|---|---|---|
| | | Cycle 1 | Cycle 2 | Cycle 3 | Cycle 4 | Cycle 5 | Cycle 6 | Cycle 7 | Cycle 8 | Cycle 9 | Cycle 10 |
| F16 ^{[2]} | F | 52 | 48 | 47 | 46 | 45 | 45 | 44 | 44 | 43 | 44 |
| F17 [¹] | E | 89 | 88 | 87 | 87 | 87 | 87 | 87 | 87 | 87 | 87 |

| | | | | | | | | | | | |
|---|---|---|---|---|---|---|---|---|---|---|---|
| [1] according to the invention [2] not according to the invention [3] Class: F: Flexible material which can be deformed and bended with permanent plastic deformation. The original geometry cannot be recovered. E: Elastomer material with high elasticity capable of recovering its original geometry. | | | | | | | | | | | |

### Curing Kinetics

Curing kinetics were evaluated by measuring the curing depth (layer thickness) of the resins exposed to irradiation a different time interval. The thickness (curing depth) of the resins is measured using a gauge length with a precision ±1 µm. The formulation is placed in a microscope slide and irradiated using the projector form the DLP printer (Light intensity: 15 mW/cm², wavelength: 405 nm). The excess of resin is removed, and the thickness is measured.

Formulation F4, F8 and F12, which correspond to S1, S12 and a mixture of S1/S12, have been compared. Table 12 shows the selected formulations from Table 7. The curing time reported is the initial time on which a layer is measured, and the curing depth is the amount of thickness that this layer was able to cure in the mentioned time.

**Table 12: Compositions for kinetic evaluations (1% photoinitiator (TPO-L) and 0.01 wt% UV blocker (BBOT))**

| Formulation | Silicone Components | | Content (%) | | | Curing Time [s] | Curing Depth [µm] | Class ^{[3]} |
|---|---|---|---|---|---|---|---|---|
| | Silicone Urethane Acrylate | Silicone acrylate | Monomer (IBOMA) | Silicone Urethane Acrylate | Silicone acrylate | | | |
| F4 ^{[1]} | S1 | - | 10 | 89 | - | 5 | 390 | RR |
| F8 ^{[2]} | - | S12 | 10 | - | 89 | 60 | 73 | F |
| F12^{[1]} | S1 | S12 | 10 | 10 | 79 | 10 | 117 | E |

| | | | | | | | | |
|---|---|---|---|---|---|---|---|---|
| [1] according to the invention [2] not according to the invention [3] as defined in Table 7 | | | | | | | | |

It is evident from Table 12 that the inventive silicone urethane (meth)acrylates lead to an increase in curing depth and a decrease of the curing time (i.e. an increase of the curing rate). The silicone urethane (meth)acrylates may therefore be used to accelerate the 3D printing process.

Table 13 shows the time dependence of the curing depth after exposing the resins to UV irradiation. The curing time will determine printing velocity object.

**Table 13: Curing depth of different Silicone formulations.**

| Time [s] | F4 | F8 | F12 |
|---|---|---|---|
| | Curing Depth [± 25 µm] | Curing Depth [± 25 µm] | Curing Depth [± 25 µm] |
| 0 | 0 | 0 | 0 |
| 2 | 0 | 0 | 0 |
| 5 | 200 | 0 | 0 |
| 10 | 390 | 0 | 117 |
| 15 | 500 | 0 | 225 |
| 20 | 600 | 73 | 390 |
| 30 | 740 | 327 | 533 |
| 40 | 850 | 470 | 593 |

F4 showed a curing depth of 390 µm at 5 s. At the same time interval, the curing depth of F8 is zero. F8 needs at least 60 s to show 73 µm. The curing efficiency of S1 in F4 (Very Rigid) is superior to S12 in F8 (Flexible). In comparison with F8, the mixture of S1 with S12 in F12 (elastomer) allows to reduce the necessary curing time to 10 s and increase the curing depth to 117 µm. The inclusion of 10 wt% of S1 improves the curing efficiency and increase printing speed allowing to produce more parts/min.

### Release Coatings

### Preparation of release coatings:

The performance testing of synthesis example S1 of the invention is carried out in formulations for release coatings. Release coatings are known from the prior art, especially in the form of abhesive coatings on sheetlike carriers and specifically therein for the use thereof in adhesive tapes or label laminates.

The formulation for the release coatings is in each case prepared by vigorously mixing 78 g of the silicone urethane acrylate from synthesis example S1, 20 g of hexanediol diacrylate and 2 g of photoinitiator TEGO^{®} A 18 (Evonik Industries AG, Germany).

The coating composition thus prepared is applied to a sheetlike carrier. This consists of a 50 cm in width, biaxially oriented polypropylene film (BoPP) that before application of the coating composition had in each case been subjected to corona pretreatment with a generator output of 1 kW. The coating composition is applied using a 5-roll coating unit from COATEMA^{®} (Coating Machinery GmbH, Dormagen, Germany) with a coat weight of approx. 1 g/m² and cured by exposure to UV light from a medium-pressure mercury vapour lamp from IST^{®} Metz GmbH (Nürtingen, Germany) at 60 W/cm and at a belt speed of 100 m/min under a nitrogen atmosphere having a residual oxygen content of less than 50 ppm.

The specimen thus coated is subjected to testing in respect of rub-off, release force and residual adhesive force.

### Rub-off:

The adhesion of the cured coating to the carrier material is checked by rubbing vigorously with a thumb on the coating. If adhesion is inadequate, rub-off develops in the form of rubber-like crumbs. Such crumbs should not form even with intense rubbing. The test is carried out by a trained panel. The result is assessed by categorization into ranges from 1 to 5, where 1 is very good and 5 is rather poor adhesion to the carrier material.

### Separation force:

The release effect with regard to adhesive materials, which in industrial applications are usually in the form of adhesive tapes or labels, is expressed by the release force (RF), a low release force describing a good release effect. The release force depends on the quality of the release coating, on the adhesive itself and on the test conditions. In the evaluation of release coatings, the same adhesives and same test conditions therefore need to be employed. For the determination of the release force, an adhesive tape or label laminate is cut to a width of 2.5 cm and the adhesive side then in each case applied to the silicone coating undergoing testing. This test is carried out according to test protocol FTM 10 of the FINAT Handbook, 8th Edition, The Hague/NL, 2009, with the modification that storage is under pressure at 40°C. The adhesive tape used is tesa^{®} 7475 (trademark of Tesa SE, Hamburg, Germany). The value reported is an average value from a fivefold determination and is reported in units of cN / 2.5 cm.

### Residual adhesive force:

The residual adhesive force (RAF) is determined according to test protocol FTM 11 of the FINAT Handbook 8th Edition, The Hague/ NL, 2009, with the difference that storage of the test adhesive strip in silicone contact is for a period of one minute and the standard surface is an untreated BoPP surface. The adhesive tape used is tesa^{®} 7475 (trademark of Tesa SE, Hamburg, Germany). The residual adhesive force is a measure of the crosslinking of silicones. If nonpolymerized and thus migratable silicone constituents are present, residual adhesion force values decrease as the proportion of such components rises. The results for the rub-off test, release force and residual adhesive force (RAF) are presented in Table 14.

**Table 14: Results of performance testing (rub-off scores from 1 to 5; release forces (RF) in cN/2.5 cm after storage for 24 hours at 40°C; residual adhesive force (RAF) in %).**

| Example | Rub-off | RF (TESA^{®} 7475) [cN/ 2,5 cm] | RAF [%] |
|---|---|---|---|
| S1 | 2 | 105 | 92 |

Table 14 shows clearly that Example S1 according to the invention permits an acceptable release force alongside good adhesion. Adhesion to the substrate is also good.

The components prepared according to the invention therefore meet all important requirements for use in release coatings. With appropriate tailoring to the respective system, they may be used either as adhesion components or as components having moderate to high release forces.

## Claims

1. A silicone urethane (meth)acrylate having
- at least three (meth)acrylate groups, and
- not more urethane groups than (meth)acrylate groups, preferably just as many urethane groups as (meth)acrylate groups.

2. The silicone urethane (meth)acrylate according to claim 1, **characterized in that** it has m (meth)acrylate groups and n urethane groups, where
m is an integer of at least 3, preferably from 3 to 5, more preferably 4;
n is an integer of at least 2, preferably from 2 to 4, more preferably 4;
with the proviso that m ≥ n, preferably m = n.

3. The silicone urethane (meth)acrylate according to claim 1 or 2, **characterized in that** it is represented by Formula (B),
X(-Y)ₚ Formula (B),
where
X is a p-valent silicone radical;
Y is bonded to a silicon atom of the silicone radical, and
is in each case independently selected from the group consisting of monovalent organic radicals having at least one urethane group and at least one (meth)acrylate group,
is preferably in each case independently selected from the group consisting of monovalent organic radicals having two (meth)acrylate groups and one or two urethane groups,
is more preferably in each case independently selected from the group consisting of monovalent organic radicals having two (meth)acrylate groups and two urethane groups;
p is an integer of at least 1, preferably from 2 to 4, more preferably 2.

4. The silicone urethane (meth)acrylate according to any one of claims 1 to 3, **characterized in that** it is comprises units represented by Formula (C),
[RₐY_{b}SiO_{(4-a-b)/2}] Formula (C),
where
a is an integer and from 0 to 2, preferably 1 or 2;
b is an integer and from 1 to 3, preferably 1;
with the proviso that a+b is from 1 to 3;
R is in each case independently selected from the group consisting of monovalent organic radicals not having any urethane groups,
is preferably in each case independently selected from the group consisting of monovalent hydrocarbon radicals having 1 to 30 carbon atoms,
is more preferably a methyl radical;
Y is as defined in claim 3.

5. A silicone urethane (meth)acrylate, preferably according to any one of claims 1 to 4, **characterized in that** it is comprises groups of Formula (A), more preferably contained in the radical Y as defined in claim 3: 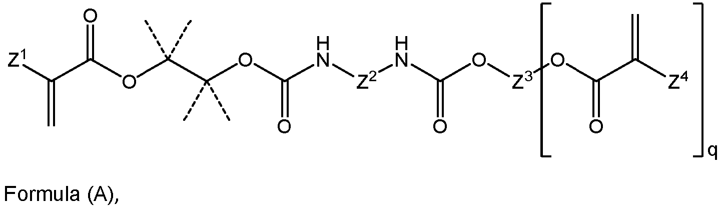 where
Z¹ is in each case independently selected from the group consisting of CH₃ or H, preferably H;
Z² is a divalent organic radical, preferably an alkylene radical, preferably an alkylene radical derived from isophorone diisocyanate as a diisocyanate of OCN-Z²-CNO;
Z³ is a (q+1)-valent organic radical where q is an integer from 1 to 3 organic radical, preferably an alkylene radical, in preferably -(C₂H₄)-;
Z⁴ is in each case independently selected from the group consisting of -CH₃ and -H, preferably H;
and wherein each dotted line denotes a covalent bond, **characterized in that** at least one of said dotted lines denote a covalent bond to an organic radical which itself has a covalent bond to a silicon atom.

6. The silicone urethane (meth)acrylate according to any one of claims 1 to 5, **characterized in that** it is represented by Formula (F),
Mₘ₁ M^{UA}ₘ₂ M^{A}ₘ₃ D_{d1} D^{UA}_{d2} D^{A}_{d3} Tₜ Q_{q} Formula (F),
where
M = [R₃SiO_{1/2}];
M^{UA} = [R₂(R^{UA})SiO_{1/2}];
M^{A} = [R₂(R^{A})SiO_{1/2}];
D = [R₂SiO_{2/2}];
D^{UA} = [R(R^{UA})SiO_{2/2}];
D^{A} = [R(R^{A})SiO_{2/2}];
T = [RSiO_{3/2}];
Q = [SiO_{4/2}];
m1 is an integer from 0 to 32, preferably from 0 to 22, more preferably 0;
m2 is an integer from 0 to 32, preferably from 1 to 10, more preferably 2;
m3 an integer from 0 to 32, preferably from 0 to 22, more preferably 0;
d1 is an integer from 1 to 1000, preferably from 5 to 500, more preferably from 10 to 400;
d2 is an integer from 0 to 10, preferably from 0 to 5, more preferably 0;
d3 is an integer from 0 to 10, preferably from 0 to 5, more preferably 0;
t is an integer from 0 to 10, preferably from 0 to 5, more preferably from 1 to 5;
q is an integer from 0 to 10, preferably from 0 to 5, more preferably from 1 to 5;
with the proviso that:
m1+m2+m3 is at least 2, preferably from 2 to 20, more preferably from 2 to 10;
m2+d2 is at least 1, preferably from 2 to 10, more preferably from 2 to 6;
in which
R is in each case independently selected from the group consisting of monovalent organic radicals not having any urethane groups or (meth)acrylate groups,
is preferably in each case independently selected from the group consisting of monovalent hydrocarbon radicals having 1 to 30 carbon atoms,
is more preferably a methyl radical;
R^{UA} is in each case independently selected from the group consisting of monovalent organic radicals having at least one (meth)acrylate group and at least one urethane group,
is preferably in each case independently selected from the group consisting of monovalent organic radicals having two (meth)acrylate groups and one or two urethane groups,
is more preferably in each case independently selected from the group consisting of monovalent organic radicals represented by formula (G), 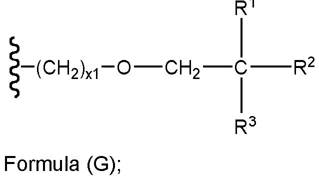
x1 is an integer from 1 to 3, preferably 3;
R¹ is in each case independently selected from the group consisting of a hydrogen radical, monovalent hydrocarbon radicals with 1 to 6 carbon atoms, R² and R³;
is preferably in each case independently selected from the group consisting of a hydrogen radical and monovalent hydrocarbon radicals having 1 to 6 carbon atoms,
is more preferably a hydrogen radical;
R² is in each case independently selected from the group consisting of a hydrogen radical, R³ and monovalent organic radicals having at least one (meth)acrylate group;
is preferably in each case independently selected from the group consisting of R³ and monovalent organic radicals having at least one (meth)acrylate group;
is more preferably in each case independently selected from monovalent radicals of Formula (H) 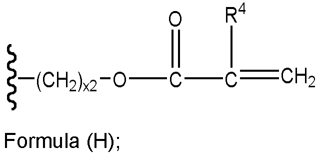
x2 = (1-x3);
R³ is in each case independently selected from the group consisting of monovalent organic radicals having at least one urethane group and at least one (meth)acrylate group;
is preferably in each case independently selected from the group consisting of monovalent organic radicals having exactly two urethane groups and exactly one (meth)acrylate group;
is more preferably in each case independently selected from the group consisting of monovalent organic radicals of Formula (I), 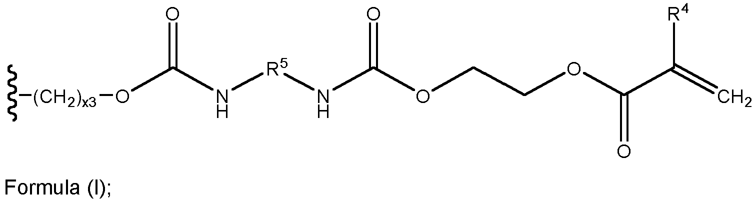
x3 is an integer from 0 to 1, preferably 0;
R⁴ is in each case independently selected from a hydrogen radical or a methyl radical,
is preferably a hydrogen radical;
R⁵ is in each case independently selected from the group of divalent, saturated or unsaturated, linear or branched or cyclic hydrocarbon radicals with 1 to 30 carbon atoms;
is preferably a divalent radical of Formula (J), 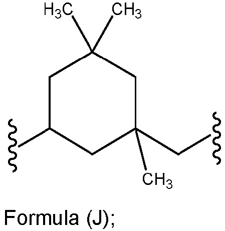
R^{A} is in each case independently selected from the group consisting of monovalent organic radicals having at least one (meth)acrylate group but no urethane group;
is preferably in each case independently selected from the group consisting of monovalent radicals represented by Formula (K) or (L);
is more preferably in each case independently selected from the group consisting of monovalent radicals represented by Formula (K); 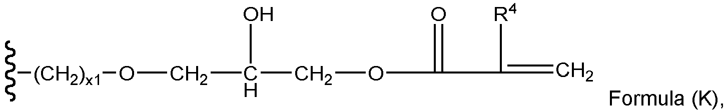 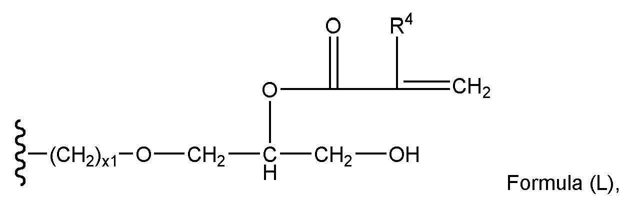
in which x1 and R⁴ are as defined above;

7. The silicone urethane (meth)acrylate according to any one of claims 3 to 6, **characterized in that** R^{UA} or Y is represented by at least one of Formulae (M), (N), (O) and (P):

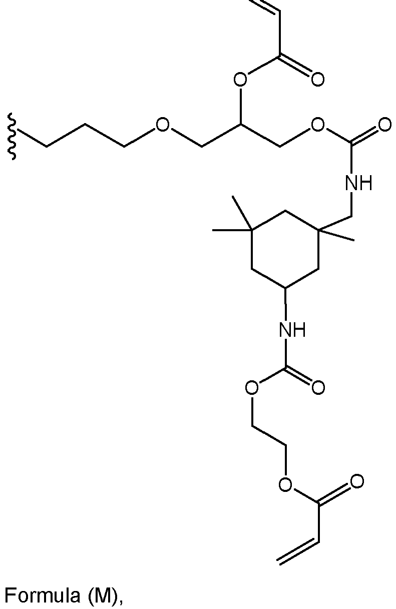

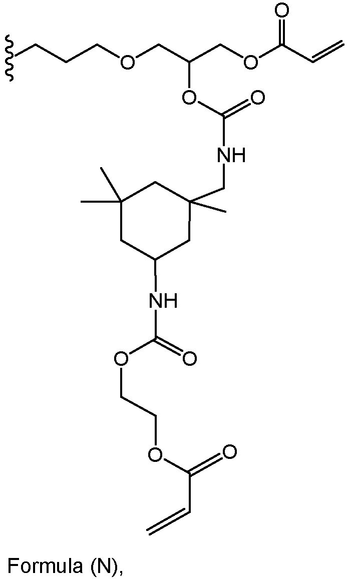

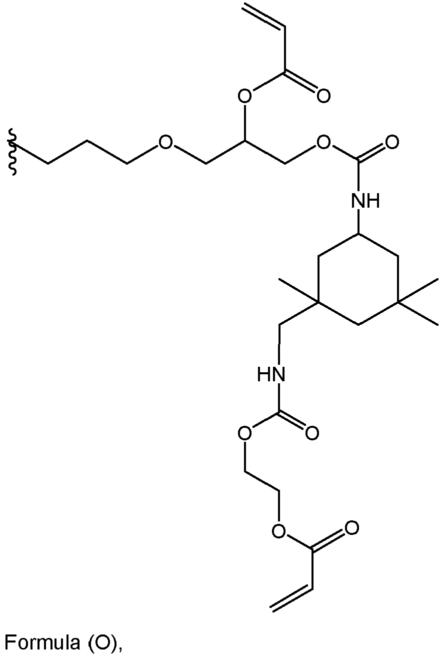

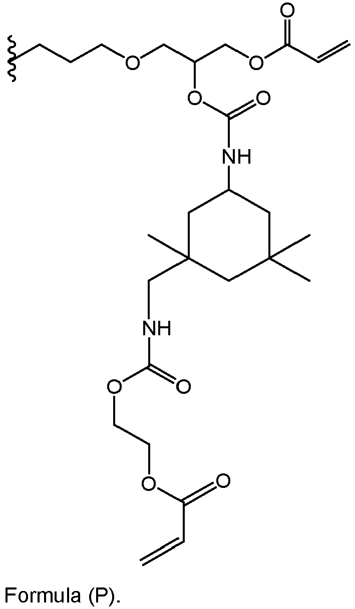

8. A method for preparing silicone urethane (meth)acrylates according to any one of claims 1 to 7, wherein said silicone urethane (meth)acrylates are formed by reaction of at least one hydroxy functional silicone (meth)acrylate with at least one isocyanate functional urethane (meth)acrylate.

9. The method according to any one of claims 8, **characterized in that** said hydroxy functional silicone (meth)acrylate is formed by reaction of at least one epoxy functional silicone with (meth)acrylic acid and/or at least one hydroxy functional (meth)acrylate.

10. A composition comprising or consisting of the following components:
(a) at least one silicone urethane (meth)acrylate according to any one of claims 1 to 7 and/or prepared by the method according to any one of claim 8 or 9;
(b) optionally at least one organic (meth)acrylate not having any silicon atoms;
(c) optionally at least one silicone (meth)acrylate not having any urethane groups;
(d) optionally at least one curing catalyst;
(e) optionally at least one additive;
(f) optionally at least one solvent.

11. The composition according to claim 10, comprising or consisting of:
- from 5 to 100, preferably from 5 to 20, more preferably from 10 to 20 % by weight at least of component (a);
- from 0 to 60, preferably from 0 to 30, more preferably from 5 to 15 % by weight at least of component (b);
- from 0 to 95, preferably from 65 to 85, more preferably from 70 to 80 % by weight at least of component (c);
- from 0 to 5, preferably from 0.1 to 3, more preferably from 0.5 to 2.5 % by weight of component (d);
- from 0 to 20, preferably from 0 to 10, more preferably from 0 to 5 % by weight of component (e);
- from 0 to 10, preferably from 0 to 5, more preferably from 0 to 1 % by weight of component (f);
based on the total weight of the sum of components (a) to (f) and/or based on the total weight of the composition, preferably based on the total weight of the composition.

12. The composition according to claim 10 or 11, **characterized in that** at least one silicone (meth)acrylate of component (c) is represented by Formula (Q) and/or at least one silicone (meth)acrylate of component (c) is represented by Formula (S),
M^{A}ₘ₁ D_{d1} Formula (Q);
where
M^{A} = [R₂(R^{A})SiO_{1/2}];
D = [R₂SiO_{2/2}];
m1 is an integer of 2;
d1 is an integer of from 1 to 10000, preferably from 50 to 5000, more preferably from 70 to 2000;
in which
R is in each case independently selected from the group consisting of monovalent organic radicals not having any urethane groups or (meth)acrylate groups, is preferably in each case independently selected from the group consisting of monovalent hydrocarbon radicals having 1 to 30 carbon atoms, is more preferably a methyl radical;
R^{A} is in each case independently selected from the group consisting of monovalent organic radicals having at least at least one (meth)acrylate group but no one urethane group;
is preferably in each case independently selected from the group consisting of monovalent radicals represented by Formula (R), 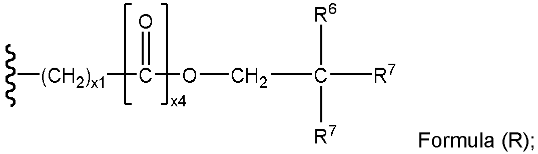
x1 is as defined in claim 6;
x4 is an integer and 0 or 1, preferably 0;
R⁶ is in each case independently selected from the group consisting of monovalent hydrocarbon radicals with 1 to 6 carbon atoms;
is preferably an ethyl radical;
R⁷ is in each case independently selected from the group consisting of monovalent organic radicals having at least one (meth)acrylate group but no urethane group; is preferably in each case independently selected from monovalent radicals of Formula (H) as defined in claim 6;
Mₘ₁D_{d1} D^{A}_{d2} D^{AC}_{d3} Formula (S);
where
M = [R₃SiO_{1/2}];
D = [R₂SiO_{2/2}];
D^{A} = [R(R^{A})SiO_{2/2}];
D^{AC} = [R(^{RAC})SiO_{2/2}];
in which:
R, m1 and d1 are as defined for Formula (Q);
d2 is an integer from 1 to 20, preferably from 2 to 10, more preferably from 3 to 8;
d3 is an integer from 0 to 3, preferably from 0 to 2, more preferably from 0 to 1;
R^{A} is in each case independently selected from the group consisting of monovalent organic radicals having at least one (meth)acrylate group but no urethane group;
is preferably in each case independently selected from the group consisting of monovalent radicals represented by Formula (K) or (L);
is more preferably in each case independently selected from the group consisting of monovalent radicals represented by Formula (K); 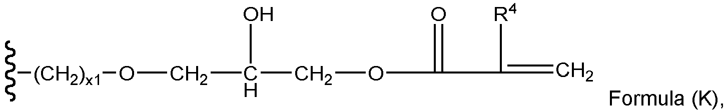 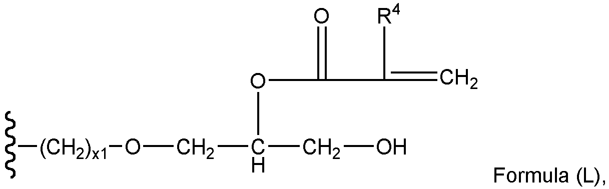
in which x1 and R⁴ are as defined in claim 6;
R^{AC} is in each case independently selected from the group consisting of monovalent organic radicals having at least one carboxylic acid ester group but no (meth)acrylate group and no urethane group;
is preferably in each case independently selected from the group consisting of monovalent radicals represented by Formula (T) or (U), 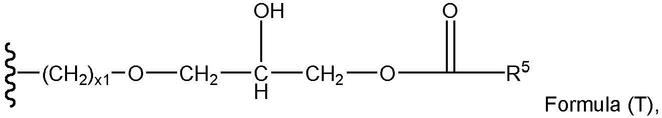 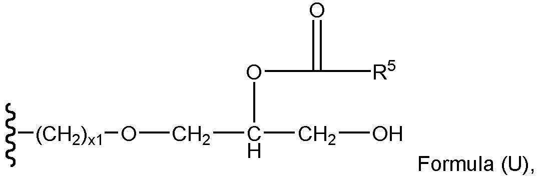
in which x1 is as defined in claim 6;
R⁵ is in each case independently selected from the group consisting of monovalent hydrocarbon radicals having 1 to 22 carbon atoms;
is preferably a methyl radical.

13. The composition according to any one of claims 10 to 12, **characterized in that** said composition is curable, preferably curable by means of a radical reaction, wherein the radical reaction can be initiated thermally, by UV radiation and/or by electron beams.

14. A method for preparing a composition according to any one of claims 10 to 13, comprising or consisting of the steps:
(i) preparing a mixture of component (a) and component (f);
(ii) preparing a mixture by adding at least one of the components (b) to (e), preferably component (b) and/or (c), to the mixture of step (i);
(iii) removing the component (f) from the mixture of step (ii);
(iv) optionally preparing a mixture by adding at least one of the components (b) to (e) to the mixture of step (iii), if that said component(s) has/have not been added in step (ii).

15. A release coating, a protective film or a protective coating obtainable by curing of a composition according to any one of claims according to any one of claims 10 to 13 or a 3D printed object obtainable by 3D printing of a composition according to any one of claims 10 to 13.

## Patentansprüche

1. Silikonurethan(meth)acrylat mit
- mindestens drei (Meth)acrylatgruppen und
- nicht mehr Urethangruppen als (Meth)acrylatgruppen, vorzugsweise genausovielen Urethangruppen wie (Meth)acrylatgruppen.

2. Silikonurethan(meth)acrylat nach Anspruch 1, **dadurch gekennzeichnet, dass** es m (Meth)acrylatgruppen und n Urethangruppen aufweist, wobei
m für eine ganze Zahl von mindestens 3, bevorzugt 3 bis 5, besonders bevorzugt 4 steht,
n für eine ganze Zahl von mindestens 2, bevorzugt 2 bis 4, besonders bevorzugt 4 steht,
mit der Maßgabe, dass m ≥ n, vorzugsweise m = n.

3. Silikonurethan(meth)acrylat nach Anspruch 1 oder 2, **dadurch gekennzeichnet, dass** es durch Formel (B) wiedergegeben wird,
X(-Y)ₚ Formel (B),
wobei
X für einen p-wertigen Silikonrest steht,
Y an ein Siliciumatom des Silikonrests gebunden ist und jeweils unabhängig aus der aus einwertigen organischen Resten mit mindestens einer Urethangruppe und mindestens einer (Meth)acrylatgruppe bestehenden Gruppe ausgewählt ist,
vorzugsweise jeweils unabhängig aus der aus einwertigen organischen Resten mit zwei (Meth)acrylatgruppen und einer oder zwei Urethangruppen bestehenden Gruppe ausgewählt ist,
besonders bevorzugt jeweils unabhängig aus der aus einwertigen organischen Resten mit zwei (Meth)acrylatgruppen und zwei Urethangruppen bestehenden Gruppe ausgewählt ist,
p für eine ganze Zahl von mindestens 1, bevorzugt 2 bis 4, besonders bevorzugt 2 steht.

4. Silikonurethan(meth)acrylat nach einem der Ansprüche 1 bis 3, **dadurch gekennzeichnet, dass** es durch Formel (C) wiedergegebene Einheiten umfasst,
[RₐY_{b}SiO_{(4-a-b)/2}] Formel (C),
wobei
a für eine ganze Zahl und von 0 bis 2, vorzugsweise 1 oder 2, steht,
b für eine ganze Zahl und von 1 bis 3, vorzugsweise 1, steht,
mit der Maßgabe, dass a+b 1 bis 3 ist,
R jeweils unabhängig aus der aus einwertigen organischen Resten, die keine Urethangruppen aufweisen, bestehenden Gruppe ausgewählt ist,
vorzugsweise jeweils unabhängig aus der aus einwertigen Kohlenwasserstoffresten mit 1 bis 30 Kohlenstoffatomen bestehenden Gruppe ausgewählt ist,
besonders bevorzugt für einen Methylrest steht,
Y wie in Anspruch 3 definiert ist.

5. Silikonurethan(meth)acrylat, vorzugsweise nach einem der Ansprüche 1 bis 4, **dadurch gekennzeichnet, dass** es Gruppen der Formel (A) umfasst, besonders bevorzugt enthalten in dem wie in Anspruch 3 definierten Rest Y: 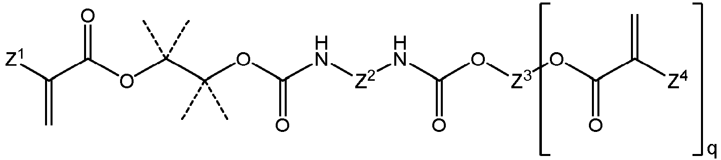 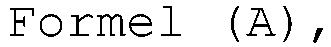 wobei
Z¹ jeweils unabhängig aus der aus CH₃ und H, vorzugsweise H, bestehenden Gruppe ausgewählt ist,
Z² für einen zweiwertigen organischen Rest, vorzugsweise einen Alkylenrest, vorzugsweise einen von Isophorondiisocyanat als ein Diisocyanat von OCN-Z²-CNO abgeleiteten Alkylenrest steht,
Z³ für einen (q+1)-wertigen organischen Rest, wobei q für eine ganze Zahl von 1 bis 3 organischen Rest steht, vorzugsweise einen Alkylenrest, bevorzugt -(C₂H₄)- steht, Z⁴ jeweils unabhängig aus der aus -CH₃ und -H, vorzugsweise H, bestehenden Gruppe ausgewählt ist,
und wobei jede gestrichelte Linie für eine kovalente Bindung steht, **dadurch gekennzeichnet, dass** mindestens eine der gestrichelten Linien für eine kovalente Bindung an einen organischen Rest, der selbst eine kovalente Bindung zu einem Siliciumatom aufweist, steht.

6. Silikonurethan(meth)acrylat nach einem der Ansprüche 1 bis 5, **dadurch gekennzeichnet, dass** es durch die Formel (F) wiedergegeben wird,
Mₘ₁ M^{UA}ₘ₂ M^{A}ₘ₃ D_{d1} D^{UA}_{d2} D^{A}_{d3} Tₜ Q_{q} Formel (F),
wobei
M = [R₃SiO_{1/2}],
M^{UA} = [R₂(R^{UA})SiO_{1/2}],
M^{A} = [R₂(R^{A})SiO_{1/2}],
D = [R₂SiO_{2/2}],
D^{UA} = [R(R^{UA})SiO_{2/2}],
D^{A} = [R(R^{A})SiO_{2/2}],
T = [RSiO_{3/2}],
Q = [SiO_{4/2}],
m1 für eine ganze Zahl von 0 bis 32, bevorzugt 0 bis 22, besonders bevorzugt 0 steht,
m2 für eine ganze Zahl von 0 bis 32, bevorzugt 1 bis 10, besonders bevorzugt 2 steht,
m3 für eine ganze Zahl von 0 bis 32, bevorzugt 0 bis 22, besonders bevorzugt 0 steht,
d1 für eine ganze Zahl von 1 bis 1000, bevorzugt 5 bis 500, besonders bevorzugt 10 bis 400 steht,
d2 für eine ganze Zahl von 0 bis 10, bevorzugt 0 bis 5, besonders bevorzugt 0 steht,
d3 für eine ganze Zahl von 0 bis 10, bevorzugt 0 bis 5, besonders bevorzugt 0 steht,
t für eine ganze Zahl von 0 bis 10, bevorzugt 0 bis 5, besonders bevorzugt 1 bis 5 steht,
q für eine ganze Zahl von 0 bis 10, bevorzugt 0 bis 5, besonders bevorzugt 1 bis 5 steht,
mit der Maßgabe, dass:
m1+m2+m3 mindestens 2, bevorzugt 2 bis 20, besonders bevorzugt 2 bis 10 ist,
m2+d2 mindestens 1, bevorzugt 2 bis 10, besonders bevorzugt 2 bis 6 ist,
wobei
R jeweils unabhängig aus der aus einwertigen organischen Resten, die keine Urethangruppen oder (Meth)acrylatgruppen aufweisen, bestehenden Gruppe ausgewählt ist,
vorzugsweise jeweils unabhängig aus der aus einwertigen Kohlenwasserstoffresten mit 1 bis 30 Kohlenstoffatomen bestehenden Gruppe ausgewählt ist,
besonders bevorzugt für einen Methylrest steht,
R^{UA} jeweils unabhängig aus der aus einwertigen organischen Resten mit mindestens einer (Meth)acrylatgruppe und mindestens einer Urethangruppe bestehenden Gruppe ausgewählt ist,
vorzugsweise jeweils unabhängig aus der aus einwertigen organischen Resten mit zwei (Meth)acrylatgruppen und einer oder zwei Urethangruppen bestehenden Gruppe ausgewählt ist,
besonders bevorzugt jeweils unabhängig aus der aus durch Formel (G) wiedergegebenen einwertigen organischen Resten ausgewählt ist, 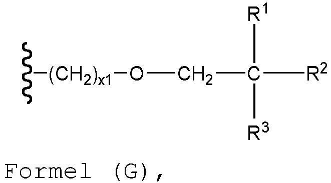
x1 für eine ganze Zahl von 1 bis 3, vorzugsweise 3, steht, R¹ jeweils unabhängig aus der aus einem Wasserstoffrest, einwertigen Kohlenwasserstoffresten mit 1 bis 6 Kohlenstoffatomen, R² und R³ bestehenden Gruppe ausgewählt ist,
vorzugsweise jeweils unabhängig aus der aus einem Wasserstoffrest und einwertigen Kohlenwasserstoffresten mit 1 bis 6 Kohlenstoffatomen bestehenden Gruppe ausgewählt ist,
besonders bevorzugt für einen Wasserstoffrest steht,
R² jeweils unabhängig aus der aus einem Wasserstoffrest, R³ und einwertigen organischen Resten mit mindestens einer (Meth)acrylatgruppe bestehenden Gruppe ausgewählt ist,
vorzugsweise jeweils unabhängig aus der aus R³ und einwertigen organischen Resten mit mindestens einer (Meth)acrylatgruppe bestehenden Gruppe ausgewählt ist, besonders bevorzugt jeweils unabhängig aus einwertigen Resten der Formel (H) ausgewählt ist, 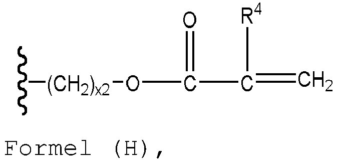
x2 = (1-x3),
R³ jeweils unabhängig aus der aus einwertigen organischen Resten mit mindestens einer Urethangruppe und mindestens einer (Meth)acrylatgruppe bestehenden Gruppe ausgewählt ist,
vorzugsweise jeweils unabhängig aus der aus einwertigen organischen Resten mit genau zwei Urethangruppen und genau einer (Meth)acrylatgruppe bestehenden Gruppe ausgewählt ist, besonders bevorzugt jeweils unabhängig aus der aus einwertigen organischen Resten der Formel (I) bestehenden Gruppe ausgewählt ist, 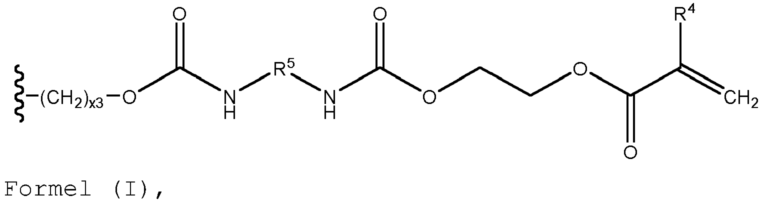
x3 für eine ganze Zahl von 0 bis 1, vorzugsweise 0, steht, R⁴ jeweils unabhängig aus einem Wasserstoffrest und einem Methylrest ausgewählt ist,
vorzugsweise für einen Wasserstoffrest steht,
R⁵ jeweils unabhängig aus der aus zweiwertigen gesättigten oder ungesättigten, geradkettigen oder verzweigten oder cyclischen Kohlenwasserstoffresten mit 1 bis 30 Kohlenstoffatomen bestehenden Gruppe ausgewählt ist,
vorzugsweise für einen zweiwertigen Rest der Formel (J) steht, 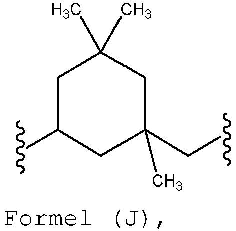
R^{A} jeweils unabhängig aus der aus einwertigen organischen Resten mit mindestens einer (Meth)acrylatgruppe, aber keiner Urethangruppe, bestehenden Gruppe ausgewählt ist, vorzugsweise jeweils unabhängig aus der aus durch Formel (K) oder (L) wiedergegebenen einwertigen Resten ausgewählt ist,
besonders bevorzugt jeweils unabhängig aus der aus durch Formel (K) wiedergegebenen einwertigen Resten ausgewählt ist, 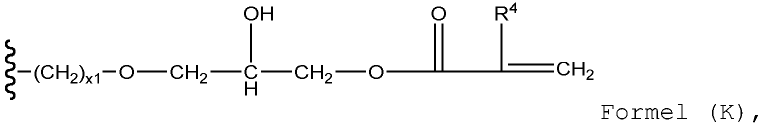 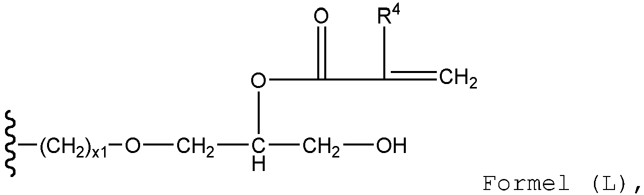
wobei x1 und R⁴ wie oben definiert sind.

7. Silikonurethan(meth)acrylat nach einem der Ansprüche 3 bis 6, **dadurch gekennzeichnet, dass** R^{UA} oder Y durch mindestens eine der Formeln (M), (N), (0) und (P) wiedergegeben wird:

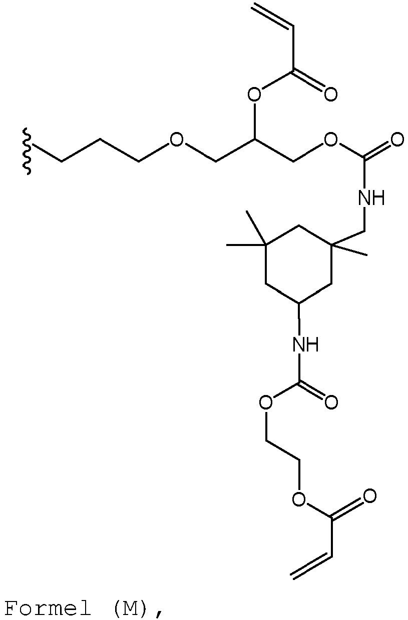

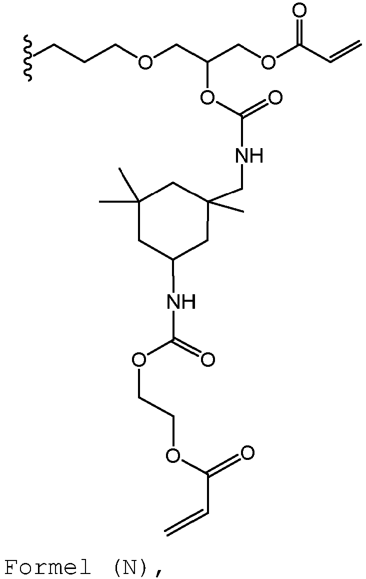

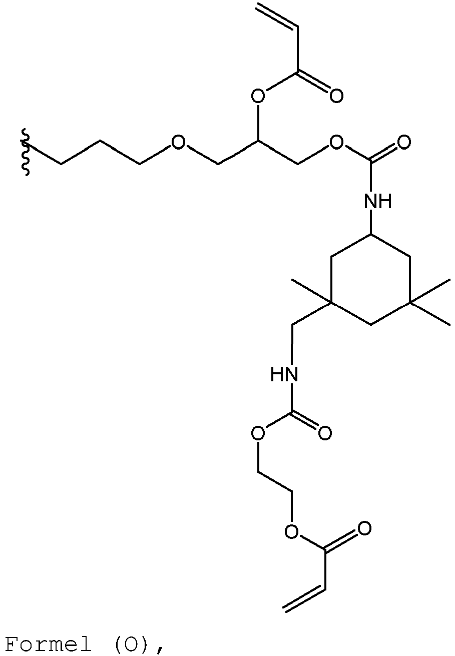

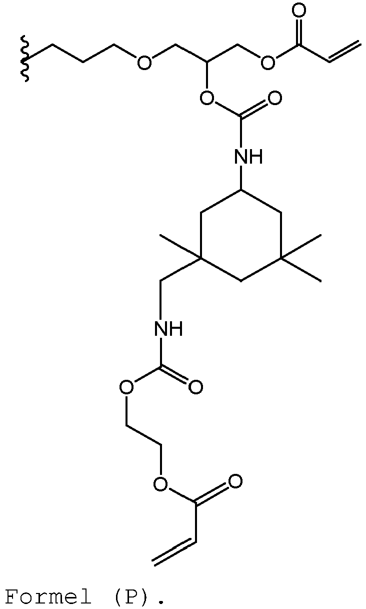

8. Verfahren zur Herstellung von Silikonurethan(meth)acrylaten nach einem der Ansprüche 1 bis 7, wobei die Silikonurethan(meth)acrylate durch Umsetzung von mindestens einem hydroxyfunktionellen Silikon(meth)acrylat mit mindestens einem isocyanatfunktionellen Urethan(meth)acrylat gebildet werden.

9. Verfahren nach einem der Ansprüche 8, **dadurch gekennzeichnet, dass** das hydroxyfunktionelle Silikon(meth)acrylat durch Umsetzung von mindestens einem epoxyfunktionellen Silikon mit (Meth)acrylsäure und/oder mindestens einem hydroxyfunktionellen (Meth)acrylat gebildet wird.

10. Zusammensetzung, umfassend oder bestehend aus den folgenden Komponenten:
(a) mindestens ein Silikonurethan(meth)acrylat nach einem der Ansprüche 1 bis 7 und/oder hergestellt nach dem Verfahren nach einem der Ansprüche 8 oder 9,
(b) gegebenenfalls mindestens ein organisches (Meth)acrylat, das keine Siliciumatome aufweist,
(c) gegebenenfalls mindestens ein Silikon(meth)acrylat, das keine Urethangruppen aufweist,
(d) gegebenenfalls mindestens einen Härtungskatalysator,
(e) gegebenenfalls mindestens ein Additiv,
(f) gegebenenfalls mindestens ein Lösungsmittel.

11. Zusammensetzung nach Anspruch 10, umfassend oder bestehend aus:
- 5 bis 100, bevorzugt 5 bis 20, besonders bevorzugt 10 bis 20 Gew.-% mindestens der Komponente (a),
- 0 bis 60, bevorzugt 0 bis 30, besonders bevorzugt 5 bis 15 Gew.-% mindestens der Komponente (b),
- 0 bis 95, bevorzugt 65 bis 85, besonders bevorzugt 70 bis 80 Gew.-% mindestens der Komponente (c),
- 0 bis 5, bevorzugt 0,1 bis 3, besonders bevorzugt 0,5 bis 2,5 Gew.-% der Komponente (d),
- 0 bis 20, bevorzugt 0 bis 10, besonders bevorzugt 0 bis 5 Gew.-% der Komponente (e),
- 0 bis 10, bevorzugt 0 bis 5, besonders bevorzugt 0 bis 1 Gew.-% der Komponente (f),
bezogen auf das Gesamtgewicht der Summe der Komponenten (a) bis (f) und/oder bezogen auf das Gesamtgewicht der Zusammensetzung, vorzugsweise bezogen auf das Gesamtgewicht der Zusammensetzung.

12. Zusammensetzung nach Anspruch 10 oder 11, **dadurch gekennzeichnet, dass** mindestens ein Silikon(meth)acrylat der Komponente (c) durch die Formel (Q) wiedergegeben wird und/oder mindestens ein Silikon(meth)acrylat der Komponente (c) durch die Formel (S) wiedergegeben wird,
M^{A}ₘ₁ D_{d1} Formel (Q),
wobei
M^{A} = [R₂(R^{A})SiO_{1/2}],
D = [R₂SiO_{2/2}],
m1 für die ganze Zahl 2 steht,
d1 für eine ganze Zahl von 1 bis 10000, bevorzugt 50 bis 5000, besonders bevorzugt 70 bis 2000 steht,
wobei
R jeweils unabhängig aus der aus einwertigen organischen Resten, die keine Urethangruppen oder (Meth)acrylatgruppen aufweisen, bestehenden Gruppe ausgewählt ist,
vorzugsweise jeweils unabhängig aus der aus einwertigen Kohlenwasserstoffresten mit 1 bis 30 Kohlenstoffatomen bestehenden Gruppe ausgewählt ist,
besonders bevorzugt für einen Methylrest steht,
R^{A} jeweils unabhängig aus der aus einwertigen organischen Resten mit mindestens einer (Meth)acrylatgruppe, aber keiner Urethangruppe, bestehenden Gruppe ausgewählt ist, vorzugsweise jeweils unabhängig aus der aus durch Formel (R) wiedergegebenen einwertigen Resten ausgewählt ist, 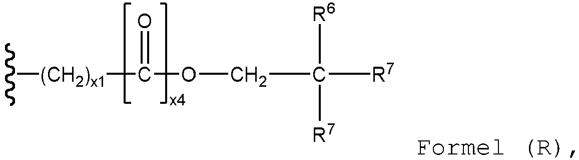
x1 wie in Anspruch 6 definiert ist,
x4 für eine ganze Zahl und 0 oder 1, vorzugsweise 0, steht,
R⁶ jeweils unabhängig aus der aus einwertigen Kohlenwasserstoffresten mit 1 bis 6 Kohlenstoffatomen bestehenden Gruppe ausgewählt ist,
vorzugsweise für einen Ethylrest steht,
R⁷ jeweils unabhängig aus der aus einwertigen organischen Resten mit mindestens einer (Meth)acrylatgruppe, aber keiner Urethangruppe, bestehenden Gruppe ausgewählt ist, vorzugsweise jeweils unabhängig aus einwertigen Resten der wie in Anspruch 6 definierten Formel (H) ausgewählt ist,
Mₘ₁D_{d1} D^{A}_{d2} D^{AC}_{d3} Formel (S),
wobei
M = [R₃SiO_{1/2}],
D = [R₂SiO_{2/2}],
D^{A} = [R(R^{A})SiO_{2/2}],
D^{AC} = [R(R^{AC})SiO_{2/2}],
wobei:
R, m1 und d1 wie für Formel (Q) definiert sind,
d2 für eine ganze Zahl von 1 bis 20, bevorzugt 2 bis 10, besonders bevorzugt 3 bis 8 steht,
d3 für eine ganze Zahl von 0 bis 3, bevorzugt 0 bis 2, besonders bevorzugt 0 bis 1 steht,
R^{A} jeweils unabhängig aus der aus einwertigen organischen Resten mit mindestens einer (Meth)acrylatgruppe, aber keiner Urethangruppe, bestehenden Gruppe ausgewählt ist, vorzugsweise jeweils unabhängig aus der aus durch Formel (K) oder (L) wiedergegebenen einwertigen Resten ausgewählt ist,
besonders bevorzugt jeweils unabhängig aus der aus durch Formel (K) wiedergegebenen einwertigen Resten ausgewählt ist, 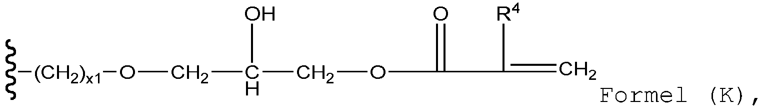 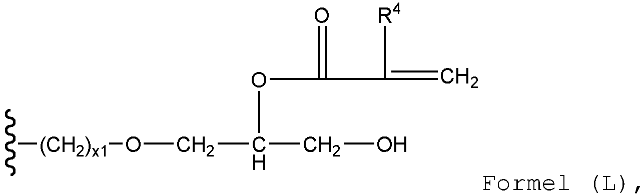
wobei x1 und R⁴ wie in Anspruch 6 definiert sind,
R^{AC} jeweils unabhängig aus der aus einwertigen organischen Resten mit mindestens einer Carbonsäureestergruppe, aber keiner (Meth)acrylatgruppe und keiner Urethangruppe, bestehenden Gruppe ausgewählt ist,
vorzugsweise jeweils unabhängig aus der aus durch Formel (T) oder (U) wiedergegebenen einwertigen Resten ausgewählt ist, 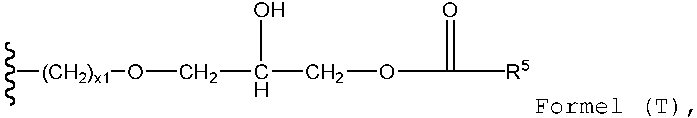 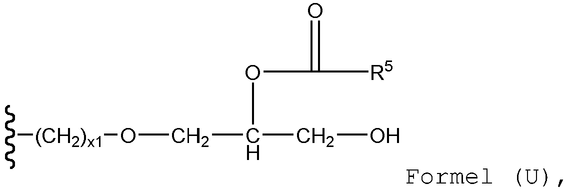
wobei x1 wie in Anspruch 6 definiert ist,
R⁵ jeweils unabhängig aus der aus einwertigen Kohlenwasserstoffresten mit 1 bis 22 Kohlenstoffatomen bestehenden Gruppe ausgewählt ist,
vorzugsweise für einen Methylrest steht.

13. Zusammensetzung nach einem der Ansprüche 10 bis 12, **dadurch gekennzeichnet, dass** die Zusammensetzung härtbar ist, vorzugsweise härtbar durch eine radikalische Reaktion, wobei die radikalische Reaktion thermisch, durch UV-Strahlung und/oder durch Elektronenstrahlen eingeleitet werden kann.

14. Verfahren zur Herstellung einer Zusammensetzung nach einem der Ansprüche 10 bis 13, umfassend oder bestehend aus den Schritten:
(i) das Herstellen einer Mischung von Komponente (a) und Komponente (f),
(ii) das Herstellen einer Mischung durch Zugabe mindestens einer der Komponenten (b) bis (e), vorzugsweise Komponente (b) und/oder (c), zu der Mischung von Schritt (i),
(iii) das Entfernen der Komponente (f) aus der Mischung von Schritt (ii),
(iv) gegebenenfalls das Herstellen einer Mischung durch Zugabe mindestens einer der Komponenten (b) bis (e) zu der Mischung von Schritt (iii), wenn diese Komponente(n) nicht in Schritt (ii) zugesetzt wurde(n).

15. Trennbeschichtung, Schutzfilm oder Schutzbeschichtung, die/der durch Aushärten einer Zusammensetzung nach einem der Ansprüche nach einem der Ansprüche 10 bis 13 erhältlich ist, oder 3D-gedrucktes Objekt, das durch 3D-Druck einer Zusammensetzung nach einem der Ansprüche 10 bis 13 erhältlich ist.

## Revendications

1. (Méth)acrylate de silicone et d'uréthane portant
- au moins trois groupes (méth)acrylate, et
- pas plus de groupes uréthane que de groupes (méth)acrylate, de préférence juste autant de groupes uréthane que de groupes (méth)acrylate.

2. (Méth)acrylate de silicone et d'uréthane selon la revendication 1, **caractérisé en ce qu'**il porte m groupes (méth)acrylate et n groupes uréthane,
où
m est un entier valant au moins 3, de préférence de 3 à 5, mieux encore 4 ;
n est un entier valant au moins 2, de préférence de 2 à 4, mieux encore 4 ;
à condition que m ≥ n, de préférence m = n.

3. (Méth)acrylate de silicone et d'uréthane selon la revendication 1 ou 2, **caractérisé en ce qu'**il est représenté par la formule (B),
X(-Y)ₚ Formule (B),
où
X est un radical silicone p-valent ;
Y est lié à un atome de silicium du radical silicone, et est dans chaque cas indépendamment choisi dans le groupe constitué par les radicaux organiques monovalents portant au moins un groupe uréthane et au moins un groupe (méth)acrylate,
de préférence est dans chaque cas indépendamment choisi dans le groupe constitué par les radicaux organiques monovalents portant deux groupes (méth)acrylates et un ou deux groupes uréthane,
mieux encore est dans chaque cas indépendamment choisi dans le groupe constitué par les radicaux organiques monovalents portant deux groupes (méth)acrylates et deux groupes uréthane ;
p est un entier valant au moins 1, de préférence de 2 à 4, mieux encore 2.

4. (Méth)acrylate de silicone et d'uréthane selon l'une quelconque des revendications 1 à 3, **caractérisé en ce qu'**il comprend des motifs représentés par la formule (C), [RₐY_{b}SiO_{(4-a-b)/2}] Formule (C), où
a est un entier valant de 0 à 2, de préférence 1 ou 2 ;
b est un entier valant de 1 à 3, de préférence 1 ;
à condition que a+b vaille de 1 à 3 ;
R est dans chaque cas indépendamment choisi dans le groupe constitué par les radicaux organiques monovalents ne portant pas de groupes uréthane,
de préférence est dans chaque cas indépendamment choisi dans le groupe constitué par les radicaux hydrocarbonés monovalents portant 1 à 30 atomes de carbone,
mieux encore est un radical méthyle ;
Y est tel que défini dans la revendication 3.

5. (Méth)acrylate de silicone et d'uréthane, de préférence selon l'une quelconque des revendications 1 à 4, **caractérisé en ce qu'**il comprend des groupes de formule (A), mieux encore contenu dans le radical Y tel que défini dans la revendication 3 : 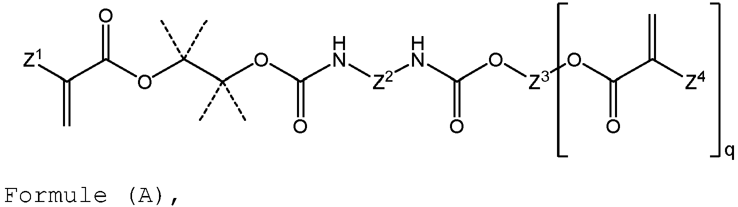 où
Z¹ est dans chaque cas indépendamment choisi dans le groupe constitué par CH₃ et H, de préférence H ;
Z² est un radical organique divalent, de préférence un radical alkylène, de préférence un radical alkylène dérivé du diisocyanate d'isophorone sous la forme d'un diisocyanate de OCN-Z²-CNO ;
Z³ est un radical organique (q+1)-valent où q est un entier valant de 1 à 3 radical organique, de préférence un radical alkylène, de préférence -(C₂H₄)- ;
Z⁴ est dans chaque cas indépendamment choisi dans le groupe constitué par -CH₃ et -H, de préférence H ;
et où chaque ligne en pointillés désigne une liaison covalente, **caractérisé en ce qu'**au moins une desdites lignes en pointillés désigne une liaison covalente avec un radical organique qui lui-même porte une liaison covalente avec un atome de silicium.

6. (Méth)acrylate de silicone et d'uréthane selon l'une quelconque des revendications 1 à 5, **caractérisé en ce qu'**il est représenté par la formule (F),
Mₘ₁ M^{UA}ₘ₂ M^{A}ₘ₃ D_{d1} D^{UA}_{d2} D^{A}_{d3} Tₜ Q_{q} Formule (F),
où
M = [R₃SiO_{1/2}] ;
M^{UA} = [R₂(R^{UA})SiO_{1/2}] ;
M^{A} = [R₂(R^{A})SiO_{1/2}] ;
D = [R₂SiO_{2/2}] ;
D^{UA} = [R(R^{UA})SiO_{2/2}] ;
D^{A} = [R(R^{A})SiO_{2/2}] ;
T = [RSiO_{3/2}] ;
Q = [SiO_{4/2}] ;
m1 est un entier valant de 0 à 32, de préférence de 0 à 22, mieux encore 0 ;
m2 est un entier valant de 0 à 32, de préférence de 1 à 10, mieux encore 2 ;
m3 un entier valant de 0 à 32, de préférence de 0 à 22, mieux encore 0 ;
d1 est un entier valant de 1 à 1000, de préférence de 5 à 500, mieux encore de 10 à 400 ;
d2 est un entier valant de 0 à 10, de préférence de 0 à 5, mieux encore 0 ;
d3 est un entier valant de 0 à 10, de préférence de 0 à 5, mieux encore 0 ;
t est un entier valant de 0 à 10, de préférence de 0 à 5, mieux encore de 1 à 5 ;
q est un entier valant de 0 à 10, de préférence de 0 à 5, mieux encore de 1 à 5 ;
à condition que :
m1+m2+m3 vaille au moins 2, de préférence de 2 à 20, mieux encore de 2 à 10 ;
m2+d2 vaille au moins 1, de préférence de 2 à 10, mieux encore de 2 à 6 ;
dans lesquels
R est dans chaque cas indépendamment choisi dans le groupe constitué par les radicaux organiques monovalents ne portant pas de groupes uréthane ni de groupes (méth)acrylate,
de préférence est dans chaque cas indépendamment choisi dans le groupe constitué par les radicaux hydrocarbonés monovalents portant 1 à 30 atomes de carbone,
mieux encore est un radical méthyle ;
R^{UA} est dans chaque cas indépendamment choisi dans le groupe constitué par les radicaux organiques monovalents portant au moins un groupe (méth)acrylate et au moins un groupe uréthane,
de préférence est dans chaque cas indépendamment choisi dans le groupe constitué par les radicaux organiques monovalents portant deux groupes (méth)acrylates et un ou deux groupes uréthane,
mieux encore est dans chaque cas indépendamment choisi dans le groupe constitué par les radicaux organiques monovalents représentés par la formule (G), 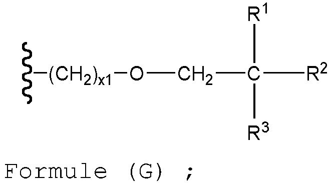
x1 est un entier valant de 1 à 3, de préférence 3 ;
R¹ est dans chaque cas indépendamment choisi dans le groupe constitué par un radical hydrogène, les radicaux hydrocarbonés monovalents portant 1 à 6 atomes de carbone, R² et R³,
de préférence est dans chaque cas indépendamment choisi dans le groupe constitué par un radical hydrogène et les radicaux hydrocarbonés monovalents portant 1 à 6 atomes de carbone,
mieux encore est un radical hydrogène ;
R² est dans chaque cas indépendamment choisi dans le groupe constitué par un radical hydrogène, R³ et les radicaux organiques monovalents portant au moins un groupe (méth)acrylate,
de préférence est dans chaque cas indépendamment choisi dans le groupe constitué par R³ et les radicaux organiques monovalents portant au moins un groupe (méth)acrylate, mieux encore est dans chaque cas indépendamment choisi parmi les radicaux monovalents de formule (H), 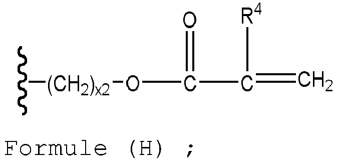
x2 = (1-x3) ;
R³ est dans chaque cas indépendamment choisi dans le groupe constitué par les radicaux organiques monovalents portant au moins un groupe uréthane et au moins un groupe (méth)acrylate,
de préférence est dans chaque cas indépendamment choisi dans le groupe constitué par les radicaux organiques monovalents portant exactement deux groupes uréthane et exactement un groupe (méth)acrylate,
mieux encore est dans chaque cas indépendamment choisi dans le groupe constitué par les radicaux organiques monovalents de formule (I), 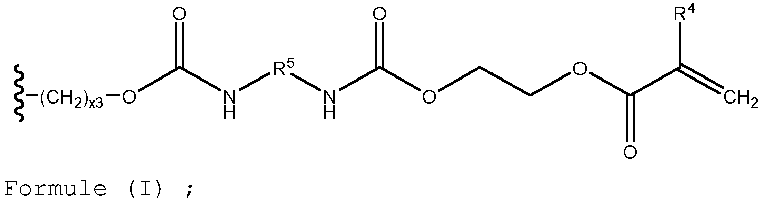
x3 est un entier valant 0 ou 1, de préférence 0 ;
R⁴ est dans chaque cas indépendamment choisi parmi un radical hydrogène et un radical méthyle,
de préférence est un radical hydrogène ;
R⁵ est dans chaque cas indépendamment choisi dans le groupe des radicaux hydrocarbonés linéaires ou ramifiés ou cycliques divalents, saturés ou insaturés, portant 1 à 30 atomes de carbone,
de préférence est un radical divalent de formule (J), 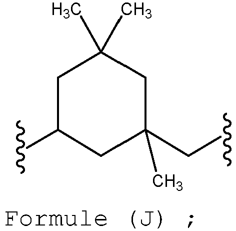
R^{A} est dans chaque cas indépendamment choisi dans le groupe constitué par les radicaux organiques monovalents portant au moins un groupe (méth)acrylate, mais pas de groupe uréthane,
de préférence est dans chaque cas indépendamment choisi dans le groupe constitué par les radicaux monovalents représentés par la formule (K) ou (L),
mieux encore est dans chaque cas indépendamment choisi dans le groupe constitué par les radicaux monovalents représentés par la formule (K) ; 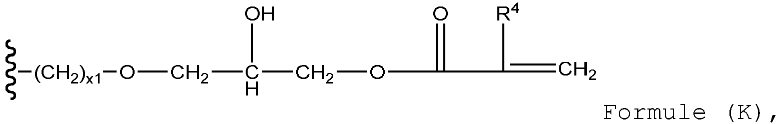 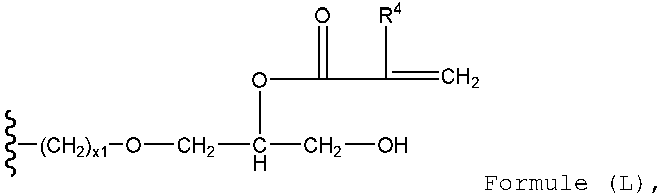
où x1 et R⁴ sont tels que définis ci-dessus.

7. (Méth)acrylate de silicone et d'uréthane selon l'une quelconque des revendications 3 à 6, **caractérisé en ce que** R^{UA} ou Y est représenté par au moins une des formules (M), (N), (O) et (P) :

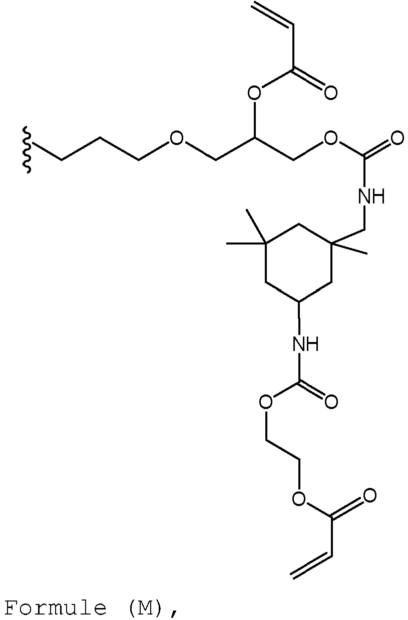

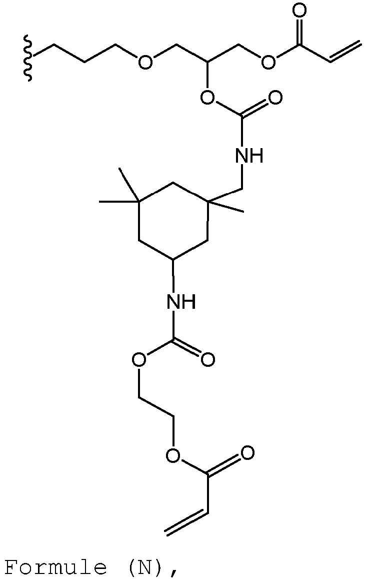

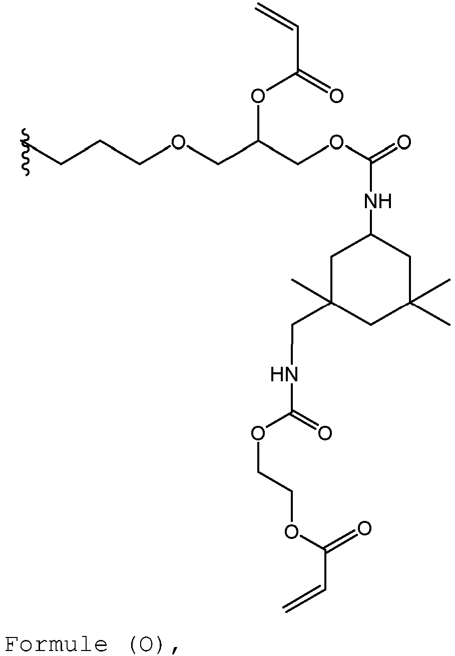

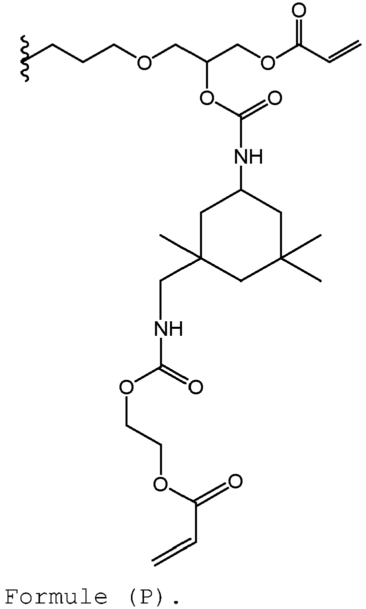

8. Procédé de préparation de (méth)acrylates de silicone et d'uréthane selon l'une quelconque des revendications 1 à 7, dans lequel lesdits (méth)acrylates de silicone et d'uréthane sont formés par réaction d'au moins un (méth)acrylate de silicone à fonctionnalité hydroxyle avec au moins un (méth)acrylate d'uréthane à fonctionnalité isocyanate.

9. Procédé selon l'une quelconque des revendications 8, **caractérisé en ce que** ledit (méth)acrylate de silicone à fonctionnalité hydroxyle est formé par réaction d'au moins un silicone à fonctionnalité époxy avec de l'acide (méth)acrylique et/ou au moins un (méth)acrylate à fonctionnalité hydroxyle.

10. Composition comprenant ou consistant en les composants suivants :
(a) au moins un (méth)acrylate de silicone et d'uréthane selon l'une quelconque des revendications 1 à 7 et/ou préparé par le procédé selon l'une quelconque des revendications 8 et 9 ;
(b) éventuellement au moins un (méth)acrylate organique ne portant pas d'atomes de silicium ;
(c) éventuellement au moins un (méth)acrylate de silicone ne portant pas de groupes uréthane ;
(d) éventuellement au moins un catalyseur de durcissement ;
(e) éventuellement au moins un additif ;
(f) éventuellement au moins un solvant.

11. Composition selon la revendication 10, comprenant ou consistant en :
- de 5 à 100, de préférence de 5 à 20, mieux encore de 10 à 20 % en poids au moins de composant (a) ;
- de 0 à 60, de préférence de 0 à 30, mieux encore de 5 à 15 % en poids au moins de composant (b) ;
- de 0 à 95, de préférence de 65 à 85, mieux encore de 70 à 80 % en poids au moins de composant (c) ;
- de 0 à 5, de préférence de 0,1 à 3, mieux encore de 0,5 à 2,5 % en poids de composant (d) ;
- de 0 à 20, de préférence de 0 à 10, mieux encore de 0 à 5 % en poids de composant (e) ;
- de 0 à 10, de préférence de 0 à 5, mieux encore de 0 à 1 % en poids de composant (f) ;
rapporté au poids total de la somme des composants (a) à (f) et/ou rapporté au poids total de la composition, de préférence rapporté au poids total de la composition.

12. Composition selon la revendication 10 ou 11, **caractérisée en ce qu'**au moins un (méth)acrylate de silicone du composant (c) est représenté par la formule (Q) et/ou au moins un (méth)acrylate de silicone du composant (c) est représenté par la formule (S),
M^{A}ₘ₁ D_{d1} Formule (Q) ;
où
M^{A} = [R₂(R^{A})SiO_{1/2}] ;
D = [R₂SiO_{2/2}] ;
m1 est un entier valant 2 ;
d1 est un entier valant de 1 à 10000, de préférence de 50 à 5000, mieux encore de 70 à 2000 ;
dans lesquels
R est dans chaque cas indépendamment choisi dans le groupe constitué par les radicaux organiques monovalents ne portant pas de groupes uréthane ni de groupes (méth)acrylate,
de préférence est dans chaque cas indépendamment choisi dans le groupe constitué par les radicaux hydrocarbonés monovalents portant 1 à 30 atomes de carbone,
mieux encore est un radical méthyle ;
R^{A} est dans chaque cas indépendamment choisi dans le groupe constitué par les radicaux organiques monovalents portant au moins un groupe (méth)acrylate, mais pas de groupe uréthane,
de préférence est dans chaque cas indépendamment choisi dans le groupe constitué par les radicaux monovalents représentés par la formule (R), 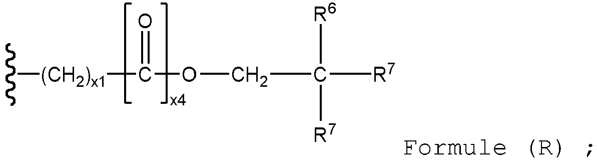
x1 est tel que défini dans la revendication 6 ;
x4 est un entier valant 0 ou 1, de préférence 0 ;
R⁶ est dans chaque cas indépendamment choisi dans le groupe constitué par les radicaux hydrocarbonés monovalents portant 1 à 6 atomes de carbone,
de préférence est un radical éthyle ;
R⁷ est dans chaque cas indépendamment choisi dans le groupe constitué par les radicaux organiques monovalents portant au moins un groupe (méth)acrylate, mais pas de groupe uréthane,
de préférence est dans chaque cas indépendamment choisi parmi les radicaux monovalents de formule (H) telle que définie dans la revendication 6 ;
Mₘ₁D_{d1} D^{A}_{d2} D^{AC}_{d3} Formule (S) ;
où
M = [R₃SiO_{1/2}] ;
D = [R₂SiO_{2/2}] ;
D^{A} = [R(R^{A})SiO_{2/2}] ;
D^{AC} = [R(R^{AC})SiO_{2/2}] ;
dans lesquels :
R, m1 et d1 sont tels que définis pour la formule (Q) ; d2 est un entier valant de 1 à 20, de préférence de 2 à 10, mieux encore de 3 à 8 ;
d3 est un entier valant de 0 à 3, de préférence de 0 à 2, mieux encore 0 ou 1 ;
R^{A} est dans chaque cas indépendamment choisi dans le groupe constitué par les radicaux organiques monovalents portant au moins un groupe (méth)acrylate, mais pas de groupe uréthane,
de préférence est dans chaque cas indépendamment choisi dans le groupe constitué par les radicaux monovalents représentés par la formule (K) ou (L),
mieux encore est dans chaque cas indépendamment choisi dans le groupe constitué par les radicaux monovalents
représentés par la formule (K) ; 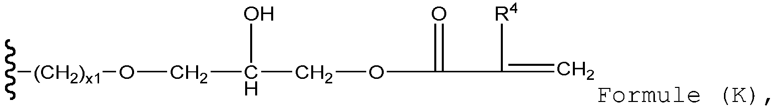 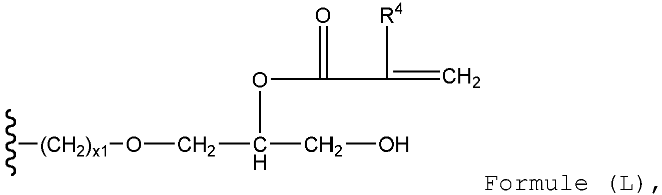
dans lesquels x1 et R⁴ sont tels que définis dans la revendication 6 ;
R^{AC} est dans chaque cas indépendamment choisi dans le groupe constitué par les radicaux organiques monovalents portant au moins un groupe ester d'acide carboxylique, mais pas de groupe (méth)acrylate ni de groupe uréthane, de préférence est dans chaque cas indépendamment choisi dans le groupe constitué par les radicaux monovalents représentés par la formule (T) ou (U), 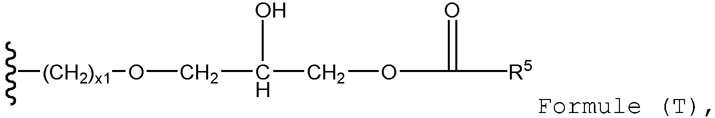 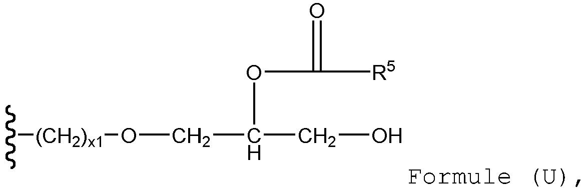
dans lesquels x1 est tel que défini dans la revendication 6 ;
R⁵ est dans chaque cas indépendamment choisi dans le groupe constitué par les radicaux hydrocarbonés monovalents portant 1 à 22 atomes de carbone,
de préférence est un radical méthyle.

13. Composition selon l'une quelconque des revendications 10 à 12, **caractérisée en ce que** ladite composition est durcissable, de préférence durcissable au moyen d'une réaction radicalaire, la réaction radicalaire pouvant être initiée thermiquement, par rayonnement UV et/ou par faisceau d'électrons.

14. Procédé de préparation d'une composition selon l'une quelconque des revendications 10 à 13, comprenant ou consistant en les étapes :
(i) préparation d'un mélange de composant (a) et de composant (f) ;
(ii) préparation d'un mélange par ajout d'au moins un des composants (b) à (e), de préférence de composant (b) et/ou (c), au mélange de l'étape (i) ;
(iii) retrait du composant (f) du mélange de l'étape (ii) ;
(iv) éventuellement, préparation d'un mélange par ajout d'au moins un des composants (b) à (e) au mélange de l'étape (iii), si le(s)dit(s) composant(s) n'a/n'ont pas été ajouté(s) à l'étape (ii).

15. Revêtement antiadhésif, film protecteur ou revêtement protecteur pouvant être obtenu par durcissement d'une composition selon l'une quelconque des revendications selon l'une quelconque des revendications 10 à 13, ou objet imprimé en 3D pouvant être obtenu par impression 3D d'une composition selon l'une quelconque des revendications 10 à 13.
